# EUROPÄISCHE PATENTSCHRIFT

(11) **EP 3 027 551 B1**
(45) Veröffentlichungstag und Bekanntmachung des Hinweises auf die Patenterteilung: **28.04.2021**
(21) Anmeldenummer: 15731484.0
(22) Anmeldetag: 11.03.2015
(51) Int. Cl.: C01B 3/04, C01B 13/02, C01B 32/40

(54) **VORRICHTUNG UND VERFAHREN ZUR ENERGIE- UND STOFFWANDLUNG MITTELS PYROELEKTRISCHEN MATERIALIEN ZUR HERSTELLUNG VON SPALTPRODUKTEN AUS FLUIDEN**
DEVICE AND METHOD FOR ENERGY AND SUBSTANCE CONVERSION BY MEANS OF PYROELECTRIC MATERIALS FOR PRODUCING CLEAVAGE PRODUCTS FROM FLUIDS
DISPOSITIF ET PROCÉDÉ DE CONVERSION D'ÉNERGIE ET DE MATIÈRE AU MOYEN DE MATÉRIAUX PYROÉLECTRIQUES AFIN D'OBTENIR DES PRODUITS DE CRAQUAGE À PARTIR DE FLUIDES

(30) Priorität: 12.03.2014 DE 102014003815
(43) Veröffentlichungstag der Anmeldung: 08.06.2016
(73) Patentinhaber: Technische Universität Bergakademie Freiberg, 09599 Freiberg (DE); Fraunhofer-Gesellschaft zur Förderung der angewandten Forschung e.V., 80686 München (DE)
(72) Erfinder: FORMAN, Clemens, 09599 Freiberg (DE); GOOTZ, Matthias, 01157 Dresden (DE); SCHEITHAUER, David, 09131 Chemnitz (DE); HERRMANN, Marco, 01099 Dresden (DE); MEHNER, Erik, 01219 Dresden (DE); MEYER, Bernd, 09599 Freiberg (DE); MEYER, Dirk C., 01326 Dresden (DE); MURITALA, Ibrahim, 09599 Freiberg (DE); PARDEMANN, Robert, 01159 Dresden (DE); SCHULZE, Olaf, 09633 Halsbrücke (DE); LEISEGANG, Tilmann, 01097 Dresden (DE)
(74) Vertreter: Rauschenbach, Marion
(86) Internationale Anmeldenummer: PCT/DE2015/000120
(87) Internationale Veröffentlichungsnummer: WO 2015/135526

(56) Entgegenhaltungen:
- WO-A1-2012/110352
- WO-A1-2012/110354
- US-A1- 2007 205 111
- US-A1- 2010 133 097
- US-A1- 2013 043 138

## Beschreibung

### Beschreibung

Die Erfindung betrifft eine Vorrichtung und ein Verfahren zur Energie- und Stoffwandlung mittels pyroelektrischer Materialien zur Herstellung von Spaltprodukten aus Fluiden.

Nach Schätzungen verschiedener Energieagenturen und Institutionen gehen heute weltweit mehr als 50 % des für die technische Nutzung gewandelten Energieaufkommens in Form von Abwärme verloren. Die Entwicklung technisch und wirtschaftlich vertretbarer Verfahren zur Nutzbarmachung von Niedertemperaturabwärme ist demnach von entscheidender Bedeutung für die Erhöhung der Prozesswirkungsgrade und somit auch der Energieeffizienz. Die Verluste nutzbarer Energie in Form von Niedertemperaturabwärme treten außerhalb der Erzeugung elektrischer Energie unter Einsatz fossiler und regenerativer Energieträger in vielfältigen Zusammenhängen auf. Dies betrifft etwa stromaufnehmende Anlagen im Zusammenhang mit regenerativen Energieträgern, die naturgemäß Speicherkonzepte erfordern (etwa Elektrolyseure für die Wasserstofferzeugung), elektrochemische Speicher, wobei die beim Auf- und Entladen erzeugte Abwärme hierbei eine der wesentlichsten Formen nicht nutzbarer Energieanteile darstellt, aber auch die Wärmeentwicklung im Bereich der Materialsynthese, z.B. von Stahl und Chemikalien, der gewerblichen Einrichtungen, z.B. Bäckereien, Kühlhäusern, Textilwäschereien, Brauereien, und der Informationstechnik, z.B. Rechenzentren.

Im Bereich der Elektroenergieerzeugung aus Niedertemperaturabwärme existieren der Organic-Rankine-Cycle (ORC)-Prozess und der Stirling-Motor als kommerziell verfügbare Verfahren. Beim ORC-Prozess werden für den Betrieb einer Dampfturbine organische Arbeitsmedien eingesetzt, die einen geringeren Siedepunkt als Wasser besitzen. Somit kann die Wärmezufuhr in diesem thermodynamischen Kreislauf insgesamt auf niedrigerem Niveau erfolgen. Abwärmeströme unterhalb von 120°C lassen sich mit diesem Prozess jedoch nicht wirtschaftlich nutzen.

Nachteile eines Stirling-Motors sind hohe Kosten, ein schlechtes Teillastverhalten und die erforderlichen hohen Betriebsdrücke (10 bar - 150 bar) bei kompakter Bauweise.

Andere Verfahren, z.B. auf der Basis von thermoelektrischen Materialien, sind für die Nutzung von prozessbedingter Niedertemperaturabwärme nicht kommerziell verfügbar.

In den letzten Jahren sind daher pyroelektrische Funktionsmaterialien verstärkt in den Fokus gerückt. Diese reagieren auf Temperaturänderungen mit der Bereitstellung elektrischer Ladungen auf ihrer Oberfläche und dadurch mit der Ausbildung starker elektrischer Felder bei Spannungen bis in den Megavolt-Bereich. Damit sind sie für Anwendungen prädestiniert, die eine Umwandlung thermischer Energie in andere Energieformen fordern. Für die Umwandlung in elektrischer Energie liegen Verfahren und Vorrichtungen vor, die im Wesentlichen auf der Druckschrift US 4 620 262 A basieren.

Pyroelektrische Materialien werden bereits im Bereich der Sensorik als thermische Detektoren kommerziell eingesetzt, beispielsweise als Bewegungsmelder, wie in der Druckschrift WO 2009/083181 A1 beschrieben ist. Hierbei lassen sie sich für das Abzählen von Menschen bei Eintritt und Austritt aus Gebäuden verwenden. Weitere Anwendungen betreffen nicht-dispersive Infrarotsensoren zur Detektion von Gas oder Feuer. Eingesetzt werden diese z.B. im medizinischen Bereich, in der Industrie, in der Automobiltechnik, bei Öl- und Gasförderung sowie in der Luft- und Raumfahrt.

Durch pyroelektrische Materialien lässt sich ungenutzte thermische Energie zur Energie- und Stoffwandlung einsetzen. Ein in der Druckschrift DE 10 2009 048 121 A1 beschriebenes Konzept sieht die Reduktion bzw. die Spaltung von Kohlendioxid CO₂ zu Kohlenmonoxid CO und Sauerstoff O₂ sowie von Wasser H₂O zu Wasserstoff H₂ und Sauerstoff O₂ mit Hilfe von elektrisch polaren Kristallen und der Abwärme von Verbrennungsgasen vor. Der entstehende Wasserstoff H₂ kann mit dem Kohlendioxid CO₂ in einem Reaktor zu Methanol mit CO₂ + 3 H₂ → CH₃OH + H₂O umgesetzt werden. Ebenso kann über ein entsprechendes Verfahren Methan mit CO₂ + 4 H₂ → CH₄ + 2 H₂O erzeugt werden.

Alternativ sind die pyroelektrisch erzeugten Gase Wasserstoff H₂ und Kohlenmonoxid CO ebenfalls zur Synthese von Methanol mit CO + 2 H₂ → CH₃OH und Methan mit CO + 3 H₂ → CH₄ + H₂O nutzbar.

Diese Grundstoffe lassen sich variabel als Einsatzstoffe in der chemischen Industrie oder als Energieeinträger einsetzen.

Die Aufspaltung des Wassers H₂O in Wasserstoff H₂ und Sauerstoff O₂ erfolgt herkömmlich mit dem Verfahren der Elektrolyse mit 2H₂O → 2 H₂ + O₂. Daneben werden in der Forschung zahlreiche alternative Verfahren wie die photoelektrochemische, photokatalytische und thermochemische Wasserspaltung entwickelt. Sie sind alle dadurch gekennzeichnet, dass Sonnenlicht auf geeignete Weise konzentriert wird und somit genügend Energie für die Reaktion der Wasserspaltung jeweils an aktiven Oberflächen bereitstellt. Darüber hinaus gibt es den Ansatz, mittels piezoelektrischen Materialien über die Aufnahme von Schwingungen Wasser zu spalten. Das Prinzip beruht auf der wiederkehrenden elastischen Verformung entsprechender Partikel direkt im Medium, die dadurch polarisiert werden und somit eine Redoxreaktion (Elektrolyse) ermöglichen.

Eine derartige Polarisierung von Materialien infolge kristallphysikalischer Kopplungen, durch die Ladungsträger für die elektrochemische Wasserspaltung bereitgestellt werden, trifft wie oben beschrieben auch für die pyroelektrischen Materialien zu. In der Druckschrift WO 2012/110354 A1 ist die Nutzung von durch Pyroelektrika erzeugter elektrischer Energie für den Betrieb einer separaten Elektrolysezelle skizziert. Dagegen ist in der Druckschrift WO 2012/110352 A1 ein Verfahren und die zugehörige Vorrichtung festgehalten, mit der gerichtete pyroelektrische Oberflächen direkt in Kontakt mit einer flüssigen chemischen Verbindung - vorzugsweise Wasser - für die Spaltung selbiger gebracht werden.

Nachteilig ist es, dass dem beschriebenen Konzept die notwendige Detailtiefe fehlt, um es in eine großtechnische Anwendung überführen zu können. Das betrifft insbesondere die Realisierung der pyroelektrischen Oberflächen, die Art und Weise der Prozessführung sowie die Abführung und Aufbereitung der erzeugten Gase.

Das diskutierte Potential der Energie- und Stoffwandlung mit pyroelektrischen Materialien lässt sich zweckmäßig in existierende Stoffwandlungsketten (Spaltung von Kohlendioxid und/oder Wasser für die Synthese von Methan und/oder Methanol) integrieren. Ein Beispiel ist das Konzept "Power-to-Gas", das eine Umwandlung von regenerativ erzeugtem Überschussstrom in Wasserstoff zur Synthese von Methan für die Einspeisung bzw. Speicherung im bestehenden Erdgasnetz vorsieht. Während der Synthetisierung von Erdgas und bei Rückverstromung fällt ungenutzte Wärme in Form von Abwärme (Niedertemperaturbereich) an, die ihrerseits genutzt werden kann. Abseits der Speichertechnologien liegen die Anwendungsgebiete für die großtechnische Nutzung von Niedertemperaturabwärme insbesondere bei Prozessen der chemischen Industrie und den Kraftwerksprozessen.

Verfahren und Vorrichtungen sind in den Druckschriften WO 2012/110352 A1 und WO 2012/110354 A1 beschrieben, die sich mit denen einer Elektrolysezelle vergleichen, wobei die zwei Kammern strikt getrennt sind, die Ladungen in diesem Fall von den pyroelektrischen Oberflächen bereitgestellt werden und somit keine Spannungsquelle angeschlossen ist. Die aktiven Oberflächen bestehen aus jeweils pyroelektrischen Materialien mit bestimmter Vorzugsrichtung, so dass diese mit einheitlicher Polarisierung (positiv bzw. negativ) jeweils einer der getrennten Kammern für den Kontakt mit der zu spaltenden chemischen Verbindung zugewandt sind. Prinzipiell entsprechen die beiden Oberflächen den Elektroden der Elektrolysezelle. Der pyroelektrische Effekt kann durch Beheizung und Kühlung des pyroelektrischen Materials und dessen Trägerstruktur hervorgerufen werden. Die Spaltprodukte gehen je Kammer in die Gasphase über und werden getrennt abgeführt.

Die sich ergebenden Nachteile werden im Folgenden angegeben:
a) Infolge des Temperaturwechsels werden sich bei Einsatz von anorganischen und organischen Pyroelektrika die relativen Oberflächenpolaritäten zwischen den Kristallseiten (Kompensationsladungen durch Polarisation des Pyroelektrikums selbst) vertauschen und dies bezogen auf die Kammeraufteilung zu falsch polarisierten Oberflächen führen. Die eindeutige Trennung der Gase in den jeweiligen Kammern entfällt damit nach wenigen Zyklen (Aufheizung und Abkühlung).
b) Als Abwandlung wird die Möglichkeit beschrieben, die unterschiedlich geladenen Seiten des pyroelektrischen Elements getrennt voneinander elektrisch leitend zu kontaktieren und jeweils mit einer Elektrode zu verbinden. Dadurch treten jedoch bei einer Übertragung des generierten elektrischen Stromes ohmsche Verluste und Verluste durch Übertragungswiderstände sowie durch den Elektrolyseprozess selbst auf, die zu verringerten Ausbeuten der Spaltprodukte führen.
c) Die Produktgase gehen physikalisch in Lösung und reichern sich zunächst im zu spaltenden Medium an. Bis es zur Sättigung des Mediums und damit zur Entgasung kommt, müssen mehrere Zyklen durchlaufen werden. Deshalb hat das Verfahren eine verzögerte Ansprechzeit.
d) Aufgrund des Kammeraufbaus befindet sich das zu spaltende Medium in Ruhelage. Eine Durchmischung im Sinne eines intensiven Wärme- und Stoffaustausches bleibt aus. Das führt einerseits zu einer Verlangsamung und Verkleinerung des Temperaturwechsels, weil das Medium zur thermisch trägen Masse wird. Zudem erfolgt keine Angabe über die Art bzw. die Intensität des Temperaturwechsels. Andererseits bewegen sich die Reaktionsprodukte und/oder Zwischenprodukte nur verlangsamt von der aktiven Zone weg bzw. hemmen den schnellen Zugang der Edukte (Triebkraft).
e) Darüber hinaus ist dem Verfahren keine Angabe zum Reinheitsgrad der zu spaltenden chemischen Verbindung zu entnehmen. Folglich sind potenzielle und unerwünschte Nebenreaktionen (Degradierung, Fremdphasenbildung) nicht auszuschließen.
f) Zur Übertragung von Wärmeströmen bei geringen Temperaturdifferenzen sind große Oberflächen notwendig. Im Aufbau mit Kammeraufteilung kann die aktive Oberfläche je Seite allerdings in physikalisch sinnvoller Weise nur im begrenzten Maße gesteigert werden. Somit wird die vorliegende Abwärme nur mit geringer Effektivität zur Stoffwandlung genutzt.
g) Außerdem wird keine Angabe über die Haftvermittlung der pyroelektrischen Materialien am Trägermaterial oder zum Trägermaterial selbst gemacht.

In der vordem genannten Vorrichtung und dem Verfahren werden die Potenziale des Prozesses selbst nicht ausgeschöpft. Das betrifft die Optimierung der Reaktionszone in folgenden Belangen:
Eine große Oberfläche der pyroelektrischen Materialien verstärkt neben deren pyrokatalytischer Wirksamkeit, das ist die Vergrößerung der Anzahl von elektrischen Ladungen, zudem die Wärmeübertragung. Eine Durchmischung des zu spaltenden Mediums sorgt für einen verbesserten Transport der Edukte an die aktive Zone bzw. für einen Abtransport der Produkte. Darüber hinaus wird hierdurch die Wärmeübertragung zwischen Wärmeträgermedium und pyroelektischem Material intensiviert.

Die Druckschrift DE 10 2011 004 397 A1 entspricht weitgehend der Druckschrift W= 2012/110352 A1 und betrifft eine Vorrichtung und ein Verfahren zum Spalten einer chemischen Verbindung. Die Vorrichtung umfasst eine Temperiervorrichtung, zwei voneinander getrennte Gasräume sowie ein pyroelektrisches Material umfassendes Element, wobei das pyroelektrische Material umfassende Element mindestens zwei Oberflächen mit unterschiedlich polarisierten Ladungen aufweist, die zumindest teilweise im Kontakt mit der zu spaltenden chemischen Verbindung stehen und von denen mindestens zwei der Oberflächen jeweils einem der getrennten Gasräumen zugewandt ist. Die an den Oberflächen entstehenden Gase gelangen von einander getrennt in den der jeweiligen Oberfläche zugeordneten Gasraum.

Es fehlen die Angaben zur Funktionsweise und Verschaltung der Wandlereinheiten. Bezüglich der Entstehung von Spaltprodukten ist festgehalten, dass diese in die jeweiligen Kammern eines Gasraumes gelangen. Zunächst muss aber dafür eine Sättigung der vorhandenen chemischen Verbindung durch die Gase erfolgt sein. Es gibt keine Abtrennung der in Lösung gehenden Spaltprodukte.

In der vorliegenden Erfindung wird das zu spaltende Medium nachfolgend als Fluid (d.h. Gas und/oder Flüssigkeit) bezeichnet.

Der Erfindung liegt die Aufgabe zugrunde, eine Vorrichtung und ein Verfahren zur Energie- und Stoffwandlung mittels pyroelektrischen Materialien zur Herstellung von Spaltprodukten aus Fluiden anzugeben, die derart geeignet ausgebildet sind, im Sinne der technischen Anwendung die aktive Oberfläche von pyroelektrischen Materialien im Prozess zu vergrößern und insgesamt stärkere Triebkräfte für den Energie-/Wärmetransport und Stofftransport bezüglich der Spaltreaktion zu gewährleisten und aufrecht zu erhalten. Ziel der Erfindung ist es daher, die Gestaltung der aktiven Oberflächen zur pyroelektrischen Energiewandlung und Stoffwandlung genau zu charakterisieren und deren Verschaltung zu einem kontinuierlichen Prozess anzugeben.

Die Aufgabe wird durch die Merkmale der Patentansprüche 1 und 11 gelöst.

Die Vorrichtung zur Energie- und Stoffwandlung mittels pyroelektrischer Materialien zur Herstellung von Spaltprodukten aus Fluiden umfasst
- zumindest mindestens zwei pyroelektrische Wandler, die in Bezug auf eine gesteuerte Ventileinrichtung zueinander geschaltet sind und die jeweils eine Abflussleitung aufweisen, wobei ein erster pyroelektrischer Wandler zur Wasserspaltung in die Spaltprodukte Wasserstoff und Sauerstoff geeignet ist und ein zweiter pyroelektrischer Wandler zur Kohlendioxidspaltung in die Spaltprodukte Kohlenmonoxid und Sauerstoff geeignet ist,
- mindestens eine dem ersten pyroelektrischen Wandler zugeordnete Leitung zur Abführung von Spaltprodukten,
- mindestens eine dem zweiten pyroelektrischen Wandler zugeordnete Leitung zur Abführung von Spaltprodukten,
wobei ein pyroelektrischer Wandler zumindest enthält
- einen ersten Wärmeübertrager, der mit einer Zuführungsleitung verbunden ist, der mindestens eine mit der Zuführungsleitung in Verbindung stehende Abflussleitung besitzt und durch den ein Wärme übernehmendes, zu spaltendes Wasser oder Kohlendioxid enthaltendes Fluid strömt,
- mindestens einen Reaktor zur Spaltung des Fluids in Spaltprodukte, wobei der Reaktor zumindest ein pyroelektrisches Material mit einer vorgegebenen Curie-Temperatur Tc aufweist,
- mindestens einen zweiten Wärmeübertrager im pyroelektrischen Wandler, der mit einer externen Pufffermedieneinheit zur Einstellung einer mittleren Temperatur verbunden ist,
- eine Apparatur zur Gasphasenübertragung und/oder Gastrennung, aus der mindestens die Leitung zur Abführung mindestens eines im Reaktor erzeugten Spaltprodukts geführt ist,
wobei die Vorrichtung mindestens eine den pyroelektrischen Wandlern zugeordnete Separationseinheit zur Separierung der aus der dem jeweiligen Reaktor nachgeordneten Apparatur zur Gasphasenübertragung und/oder Gastrennung abgeführten finalen Spaltprodukte umfasst und die Leitungen zur kontrollierten Abführung der Spaltprodukte in die Separationseinheit münden, aus der zumindest Leitungen zur Abführung von getrennten finalen Spaltprodukten führen, wobei gemäß dem Kennzeichenteil des Patentanspruchs 1
die Ventileinrichtung zu einer wechselseitigen, mit einer vorgegebenen Ventilsteuer-Frequenz geschalteten Zuführung von mindestens einem Fluidstrom mit einer hohen Temperatur T_{H} und von mindestens einem Fluidstrom mit einer zur Temperatur T_{H} niedrigeren Temperatur T_{K} vorgesehen ist und
eine gesteuerte Umwälzpumpe vorhanden ist, die innerhalb eines in den pyroelektrischen Wandlern vorhandenen Kreislaufs mit den zum Kreislauf gehörenden und miteinander verbundenen ersten Wärmeübertrager, Reaktor und der Apparatur zur Gasphasenübertragung und/oder Gastrennung angeordnet ist und die den Kreislauf über ein den Kreislauf verbindendes Leitungssystem mit fließendem und zu spaltendem Fluid versorgt, wobei die Umwälzpumpe mit der gesteuerten Ventileinrichtung extern über eine Steuereinheit in Verbindung steht.

Vom zu spaltenden Fluid abhängig ist mindestens ein zweiter Wärmeübertrager im pyroelektrischen Wandler enthalten, der mit einer externen Puffermediumeinheit zur Einstellung einer mittleren Temperatur verbunden ist.

Im pyroelektrischen Wandler ist für ein zu spaltendes Wasser oder Kohlendioxid enthaltendes Fluid im Kreislauf zwischen der Apparatur zur Gasphasenübertragung und/oder Gastrennung und der gesteuerten Umwälzpumpe eine mit Ventilen ausgebildete Einrichtung zur Zuführung von zu spaltendem Wasser oder Kohlendioxid enthaltendem Fluid und von wahlweise in das Wasser oder Kohlendioxid enthaltende Fluid einfügbaren Zusatzstoffen mit einer zugehörigen Ausflussleitung angeordnet.

Ein eingebauter Reaktor kann mehrere Reaktorsegmente umfassen, die jeweils mit einer pyroelektrischen Materialeinheit ausgebildet und die derart angeordnet sind, dass sich die jeweilige Curie-Temperatur T_{C1}, T_{C2}, T_{C3}, T_{C4} der pyroelektrischen Materialien in den pyroelektrischen Materialeinheiten über die Reaktorlänge L des Reaktors mit T_{C1} > T_{C2} > T_{C3} > T_{C4} verringert.

Mindestens der erste pyroelektrische Wandler und ein zweiter pyroelektrischen Wandler können in Bezug auf die gesteuerte Ventileinrichtung parallel zueinander geschaltet sein.

Mehrere pyroelektrische Wandler können in der Art einer temperaturbezogenen stufenförmigen Reihe angeordnet und geschaltet sein, wobei die Reihenschaltung der pyroelektrischen Wandler nach fallender Curie-Temperaturen mit T_{C1} > T_{C2} >T_{C3} des jeweiligen pyroelektrischen Materials zugeordnet ist, wobei die pyroelektrischen Wandler mit einem die pyroelektrischen Wandler verbindenden Leitungssystem eines Heizzyklus HZ für die Fluide 50h mit sich abkühlender Temperatur mit T_{H0} > T_{H1} > T_{H2} > T_{H3} und eines Kühlzyklus KZ für die Fluide 50k mit steigender Temperatur T_{K0} < T_{K1} < T_{K2} < T_{K3} in Verbindung stehen und jeder pyroelektrische Wandler Leitungen zur Abführung von jeweils mindestens einem Spaltprodukt aufweist.

In einer detaillierten Ausführung kann die Vorrichtung zumindest umfassen
- einen ersten pyroelektrischen Wandler zur Wasser-H₂O-Spaltung in die Spaltprodukte Wasserstoff H₂ und Sauerstoff O₂ aus dem zu spaltenden Fluid Wasser H₂O aus einer externen ersten H₂O-Quelle,
- einen zweiten pyroelektrischen Wandler zur Kohlendioxid-CO₂-Spaltung in die Spaltprodukte Kohlenmonoxid CO und Sauerstoff O₂ aus dem zu spaltenden Kohlendioxid CO₂ aus einer externen zweiten CO₂-Quelle,
- die dem ersten pyroelektrischen Wandler nachgeordnete Separationseinheit zur Separierung von Wasserstoff H₂ und Sauerstoff O₂,
- eine dem zweiten pyroelektrischen Wandler nachgeordnete zweite Separationseinheit zur Separierung von Kohlenmonoxid CO und Sauerstoff O₂,
- zumindest einen ersten der zweiten Separationseinheit nachgeordneten Konverter zur Synthese von Kohlenmonoxid CO und Wasserstoff H₂ zu Methan CH₄ und/oder zu Methanol CH₃OH.

Die Vorrichtung kann zumindest einen zweiten der ersten Separationseinheit nachgeordneten Konverter zur Synthese von Kohlendioxid CO₂ und Wasserstoff H₂ zu Methan CH₄ und/oder zu Methanol CH₃OH aufweisen.

Die Konverter können pyroelektrisches Material aufweisen.

Die eingesetzte Steuereinheit kann zumindest mit den pyroelektrischen Wandlern zugeordneten Temperatursensoren in Verbindung stehen, die z.B. an den Komponenten der jeweiligen Bauteile/Baugruppen angebracht sind.

Das Verfahren zur Energiewandlung und Stoffwandlung mittels pyroelektrischer Materialien zur Herstellung von Spaltprodukten aus Wasser oder Kohlendioxid unter Einsatz der vorgenannten Vorrichtung umfasst
gemäß dem Kennzeichenteil des Patentanspruchs 11,
zumindest folgende Schritte:
- wechselseitige Zuführung von mindestens einem Fluidstrom mit der hohen Temperatur T_{H} und von mindestens einem Fluidstrom mit einer zur Temperatur T_{H} niedrigeren Temperatur T_{K} über eine gesteuerte Ventileinrichtung in mindestens einen pyroelektrischen Wandler, wobei die Temperaturen T_{H} und T_{K} zu einem Temperaturfenster gehören, das unterhalb der Curie-Temperatur Tc des jeweils eingesetzten pyroelektrischen Materials liegt,
- Übertragung der Wärme aus den Fluidströmen über einen Wärmeübertrager direkt auf das zu spaltende Wasser oder Kohlendioxid enthaltende Fluid, wobei die gesteuerte wechselnde Zuführung von Fluidströmen unterschiedlicher Temperatur T_{H} und T_{K} in den Wärmeübertrager zur Steuerung des Wärme übernehmenden Wasser oder Kohlendioxid enthaltenden Fluids für einen Kreislauf des jeweiligen pyroelektrischen Wandlers durchgeführt wird,
- Durchströmung mindestens eines pyroelektrisches Material enthaltenen Reaktors mittels des zu spaltenden Wasser oder Kohlendioxid enthaltenden Fluids als Wärmeträgermedium,
- Durchführung der Spaltung des zu spaltenden Wasser oder Kohlendioxid enthaltenden Fluids in mindestens ein Spaltprodukt innerhalb mindestens eines Reaktors unterhalb der Curie-Temperatur Tc des dortigen pyroelektrischen Materials in einem vorgegebenen Temperaturfenster, wobei die Temperatursensoren Messungen der Temperaturen zur jeweiligen Einhaltung des Abstandes zur Curie-Temperatur Tc sowie des Weiteren eine Steuerung der Temperaturfenster unterhalb der jeweiligen Curie-Temperatur Tc der pyroelektrischen Materialien durchführen,
- Realisierung von wechselnd geschaltetem Heizzyklus HZ und Kühlzyklus KZ in der Vorrichtung mit vorgegebener Frequenz,
- Einstellung einer Mitteltemperatur des zu spaltenden Wasser oder Kohlendioxid enthaltenden Fluids in einem zweiten Wärmeübertrager durch ein Puffermedium aus einer externen Puffermediumeinheit innerhalb eines pyroelektrischen Wandlers,
- Abtrennung mindestens eines der in dem Reaktor erzeugten Spaltproduktes in mindestens einer nachfolgenden Separationseinheit.

Die Temperaturschwankungen der über die gesteuerte Ventileinrichtung eingespeisten Fluidströme werden zur Erwärmung und zur Kühlung des zu spaltenden Wasser oder Kohelndioxid enthaltenden Fluids als Wärmeträgermedium im pyroelektrischen Wandler genutzt.

Ein sofortiger Transport der Spaltprodukte kann aus dem Reaktor erfolgen.

Eine Aufrechterhaltung von zeitlichen Temperaturänderungen durch Absolvierung des Wechsels von Heizzyklus HZ und Kühlzyklus KZ kann innerhalb des vorgegebenen Temperaturfensters unterhalb der Curie-Temperatur Tc des jeweiligen pyroelektrischen Materials durchgeführt werden.

Die pyroelektrischen Materialien in den pyroelektrischen Materialeinheiten der Reaktoren können in Strömungsrichtung beim Heizzyklus HZ so gestaffelt angeordnet sein, dass die Curie-Temperaturen Tc der pyroelektrischen Materialien mit der Abnahme der Temperatur des durchströmenden und zu spaltenden Wasser oder Kohlendioxid enthaltenden Fluids abnehmen.

Eine Nutzung des zu spaltenden Wasser oder Kohlendioxid enthaltenden Fluids als Reaktand und Wärmeträgermedium kann im Kreislauf des pyroelektrischen Wandlers erfolgen.

Innerhalb eines pyroelektrischen Wandlers wird eine Einstellung einer Mitteltemperatur des zu spaltenden Fluids in einem zweiten Wärmeübertrager durch ein Puffermedium aus einer externen Puffermediumeinheit durchgeführt.

Für den Fall, dass das Wasser oder Kohlendioxid enthaltende Fluid eine Flüssigkeit ist, können mit Hilfe der Apparatur in Form eines Membrankontaktors die im flüssigen Wasser oder Kohlendioxid enthaltenden Fluid gelösten Spaltprodukte unmittelbar nach dem Reaktor per Druckabsenkung aus der Flüssigkeit heraus in die Gasphase überführt und abgezogen werden, wodurch die zu spaltende Wasser oder Kohlendioxid enthaltende Flüssigkeit damit regeneriert wird und wieder unbeladen innerhalb des Kreislaufs für die Zuführung in den Reaktor zur Verfügung steht.

Im pyroelektrischen Wandler können die Spaltreaktionen in sauren oder basischen Fluiden durchgeführt werden, wobei ein hinzugefügter Zusatzstoff wenigstens ein Spaltprodukt während des Prozesses reversibel bindet und dadurch auch für eine Trennung der Spaltprodukte sorgt, wobei eine Beeinflussung des pH-Wertes durch Zusatzstoffe die ablaufenden Redoxreaktionen im Reaktor verbessert, wobei die Zusatzstoffe flüssig oder fest sein können.

Bei Vorliegen von Gas als das zu spaltende Wasser oder Kohlendioxid enthaltende Fluid kann die Apparatur zur Gasphasenüberführung und/oder Gastrennung mit einer selektiven Membran eine Gastrennung durchführen.

Im Reaktor kann eine Spaltung gasförmiger Substanzen unter erhöhtem Druck durchgeführt werden.

Die Abtrennung eines Spaltproduktes kann auch mit vorgegebenen Adsorbentien oder Absorbentien durchgeführt werden.

Weiterbildungen und vorteilhafte Ausgestaltungen der Erfindung sind in weiteren Unteransprüchen angegeben.

Die Erfindung wird mittels mehrerer Ausführungsbeispiele anhand von Zeichnungen erläutert.

### Es zeigen:

- Fig. 1: eine schematische Darstellung einer erfindungsgemäßen Vorrichtung zur Energie- und Stoffwandlung mittels pyroelektrischen Materialien zur Erzeugung von Spaltprodukten aus Fluiden mit zwei pyroelektrischen Wandlern,
- Fig. 2: eine schematische Darstellung einer einfachen Vorrichtung zur Energie- und Stoffwandlung mittels pyroelektrischen Materialien zur Erzeugung von Spaltprodukten aus Fluiden mit einem pyroelektrischen Wandler,
- Fig. 3: schematische Darstellungen einer alternierenden Prozessabfolge von Heizzyklus und von Kühlzyklus in einer Vorrichtung nach Fig. 1 und Fig. 2,
- Fig. 4: eine schematische Darstellung einer erfindungsgemäßen Vorrichtung zur Energie- und Stoffwandlung mittels pyroelektrischen Materialien zur Erzeugung von Spaltprodukten aus Fluiden mit mehreren in Reihe geschalteten pyroelektrischen Wandlern und
- Fig. 5: eine schematische Darstellung einer erfindungsgemäßen Vorrichtung zur Energie- und Stoffwandlung mittels pyroelektrischen Materialien zur Erzeugung von Spaltprodukten aus Fluiden unter stofflicher Nutzung von Kohlendioxid und Wasser.

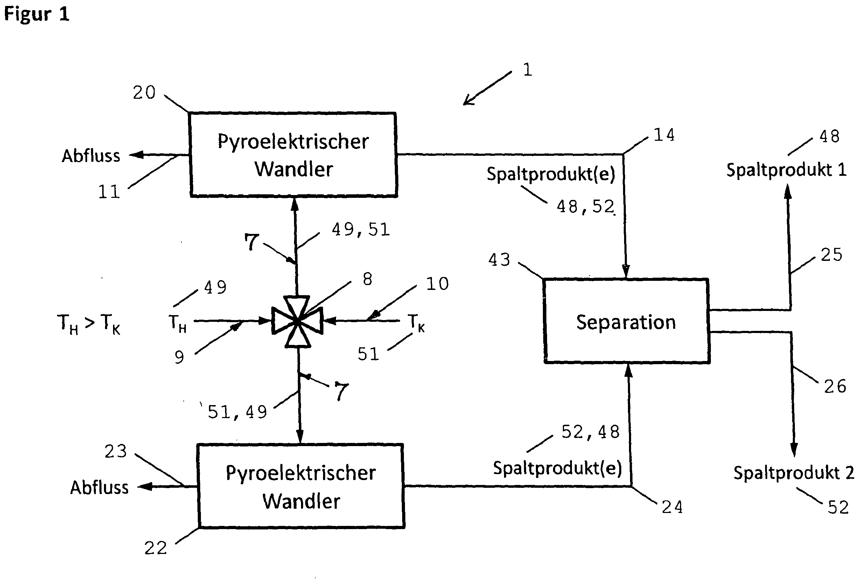

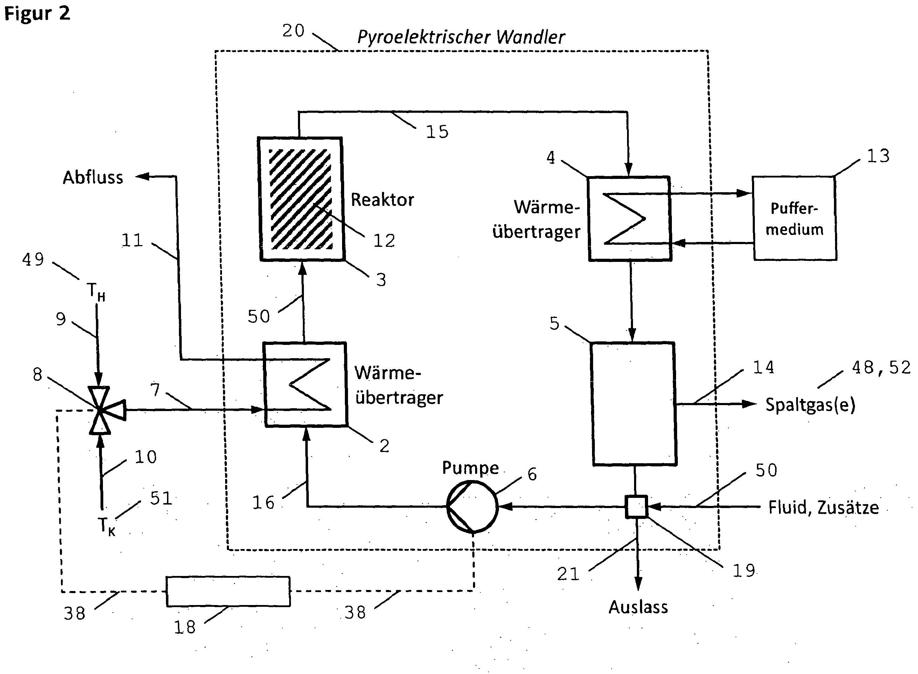

Im Folgenden werden die beiden Fig. 1 und Fig. 2 gemeinsam betrachtet.

In Fig. 1 ist in einer schematischen Darstellung eine Vorrichtung 1 zur Energie- und Stoffwandlung mittels pyroelektrischen Materialien zur Herstellung von Spaltprodukten 48, 52 aus einem Fluid 50 dargestellt, wobei die Vorrichtung 1 umfasst
- zumindest zwei pyroelektrische Wandler 20, 22, die in Bezug auf eine gesteuerte Ventileinrichtung 8 zueinander geschaltet sind und die jeweils eine Abflussleitung 11, 23 aufweisen,
- mindestens eine dem ersten pyroelektrischen Wandler 20 zugeordnete Leitung 14 zur Abführung von Spaltprodukten 48, 52,
- mindestens eine dem zweiten pyroelektrischen Wandler 22 zugeordnete Leitung 24 zur Abführung von Spaltprodukten 52, 48,
wobei ein in Fig. 2 dargestellter pyroelektrischer Wandler 20 zumindest enthält
- einen ersten Wärmeübertrager 2, der mit einer wechselseitigen Zuführungsleitung 7 verbunden ist, der die Ventileinrichtung 8 zur Zuführung von mindestens einem Fluidstrom 9 mit einer hohen Temperatur T_{H} und von mindestens einem Fluidstrom 10 mit einer zur Temperatur T_{H} niedrigeren Temperatur T_{K} zugeordnet ist, und der mindestens eine mit der Zuführungsleitung 7 in Verbindung stehenden Abflussleitung 11 besitzt und durch den ein Wärme übernehmendes, zu spaltendes Fluid 50 strömt,
- mindestens einen Reaktor 3 zur Spaltung des Fluids 50 in Spaltprodukte 48, wobei der Reaktor 3 zumindest ein pyroelektrisches Material 12 mit einer vorgegebenen Curie-Temperatur Tc aufweist,
- eine Apparatur 5, aus der mindestens die Leitung 14 zur Abführung mindestens eines im Reaktor 3 erzeugten Spaltprodukts 48 geführt ist,
- eine gesteuerte Umwälzpumpe 6, die innerhalb eines Kreislaufs 15 mit den zum Kreislauf 15 gehörenden und miteinander verbundenen ersten Wärmeübertrager 2, Reaktor 3 und der eingebrachten Apparatur 5 angeordnet ist und die den Kreislauf 15 über ein den Kreislauf 15 verbindendes Leitungssystem 16 mit fließendem und zu spaltendem Fluid 50 versorgt, wobei die Umwälzpumpe 6 mit der gesteuerten Ventileinrichtung 8 extern über eine Steuereinheit 18 in Verbindung steht.

Die Vorrichtung 1 umfasst gemäß Fig. 1 mindestens eine den pyroelektrischen Wandlern 20, 22 zugeordnete Separationseinheit 43 zur definierten Separierung der aus der dem jeweiligen Reaktor 3 nachgeordneten Apparatur 5 abgeführten finalen Spaltprodukte 48, 52 und münden die Leitungen 14, 24 zur kontrollierten Abführung der Spaltprodukte 48, 52 in die Separationseinheit 43, aus der zumindest Leitungen 25, 26 zur Abführung von definiert getrennten finalen Spaltprodukten 48, 52 führen.

Vom zu spaltenden Fluid 50 abhängig ist gemäß Fig. 2 ein zweiter Wärmeübertrager 4 im pyroelektrischen Wandler 20 enthalten, wobei der zweite Wärmeübertrager 4 mit einer externen Puffermediumeinheit 13 zur Einstellung einer mittleren Temperatur verbunden ist. Der zweite Wärmeübertrager 4 kann sich im Kreislauf 15 zwischen dem Reaktor 3 und der Apparatur 5 befinden.

Die Umwälzpumpe 6 des Kreislaufs 15 ist in der Regel zwischen der Apparatur 5 und dem ersten Wärmeübertrager 2 angeordnet.

Im pyroelektrischen Wandler 20 ist für ein zu spaltendes flüssiges Fluid 50 im Kreislauf 15 zwischen der Apparatur 5 und der gesteuerten Umwälzpumpe 6 eine mit Ventilen ausgebildete Einrichtung 19 zur steuerbaren Zuführung von zu spaltendem Fluid 50 und von wahlweise in das Fluid 50 einfügbaren Zusatzstoffen mit einer zugehörigen Ausflussleitung 21 angeordnet.

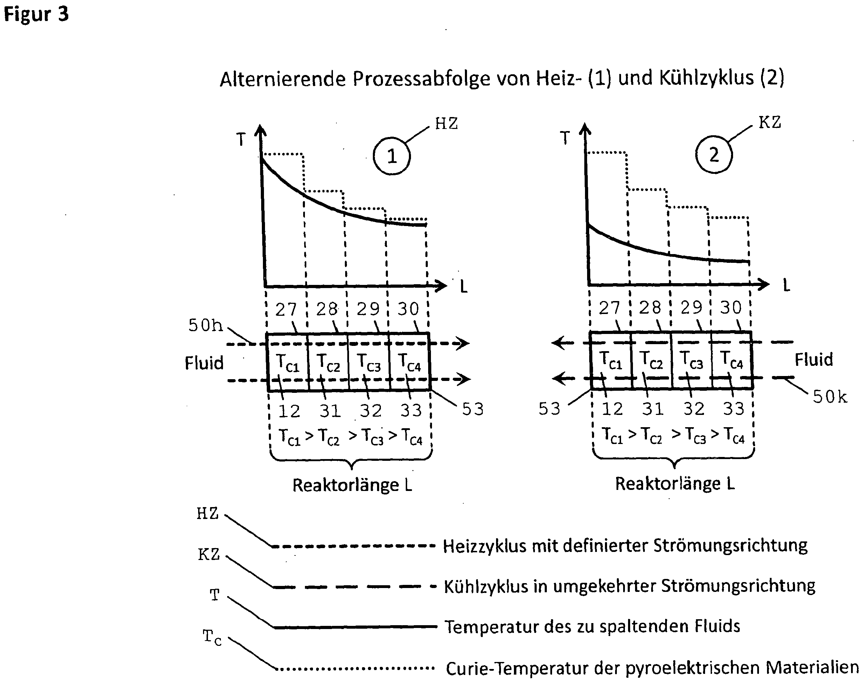

Ein in Fig. 3 dargestellter eingebauter Reaktor 3 kann mehrere Reaktorsegmente 27, 28, 29, 30 umfassen, die jeweils mit einer pyroelektrischen Materialeinheit 12, 31, 32, 33 ausgebildet und die derart angeordnet sind, dass sich die jeweilige Curie-Temperatur T_{C1}, T_{C2}, T_{C3}, T_{C4} der pyroelektrischen Materialien in den pyroelektrischen Materialeinheiten 12, 31, 32, 33 über die Reaktorlänge L des Reaktors 3 mit T_{C1} > T_{C2} > T_{C3} > T_{C4} verringert.

Mindestens der erste pyroelektrische Wandler 20 und ein zweiter pyroelektrischen Wandler 22 können in Bezug auf die gesteuerte Ventileinrichtung 8, wie in Fig. 1 gezeigt ist, parallel zueinander geschaltet sein.

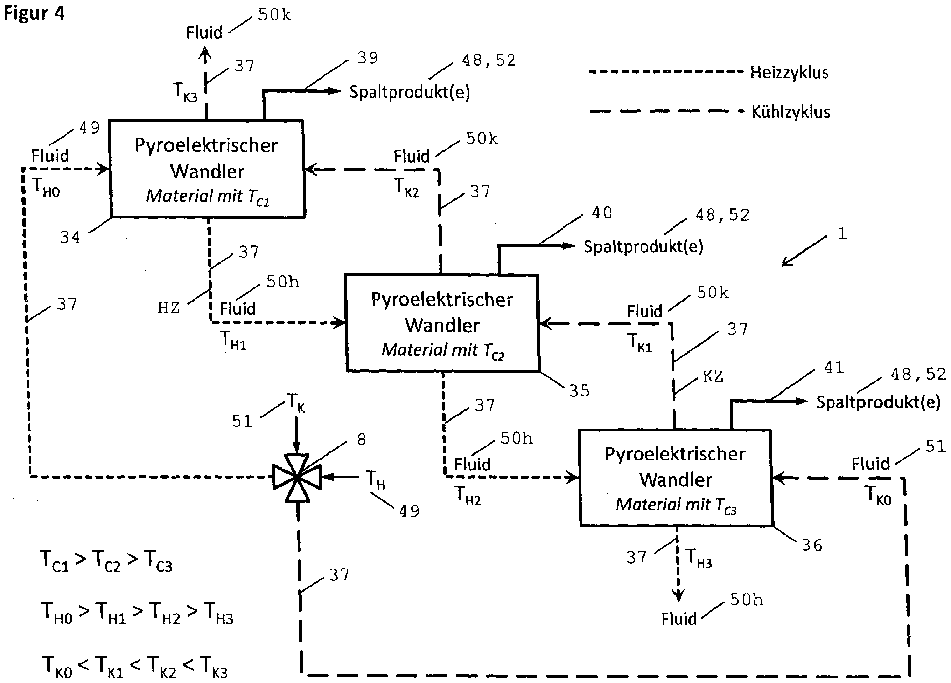

Mehrere pyroelektrische Wandler 34, 35, 36 können gemäß Fig. 4 in der Art einer temperaturbezogenen stufenförmigen Reihe angeordnet und geschaltet sein, wobei die Reihenschaltung der pyroelektrischen Wandler 34, 35, 36 nach fallender Curie-Temperaturen mit T_{C1} > T_{C2} >Tc₃ des jeweiligen pyroelektrischen Materials zugeordnet ist,
wobei die pyroelektrischen Wandler 34, 35, 36 mit einem die pyroelektrischen Wandler 34, 35, 36 verbindenden Leitungssystem 37 eines Heizzyklus HZ für die Fluide 50h mit sich abkühlender Temperatur mit T_{H0} > T_{H1} > T_{H2} > T_{H3} und eines Kühlzyklus KZ für die Fluide 50k mit steigender Temperatur T_{K0} < T_{K1} < T_{K2} < T_{K3} in Verbindung stehen und jeder pyroelektrische Wandler 34, 35, 36 Leitungen 39, 40, 41 zur Abführung von jeweils mindestens einem Spaltprodukt aufweist.

Das Verfahren zur Energiewandlung und Stoffwandlung mittels pyroelektrischer Materialien zur Herstellung von Spaltprodukten aus einem Fluid 50 unter Einsatz der vorgenannten Vorrichtung 1 umfasst
zumindest folgende Schritte:
- wechselseitige Zuführung von mindestens einem Fluidstrom 9 mit der hohen Temperatur T_{H} und von mindestens einem Fluidstrom 10 mit einer zur Temperatur T_{H} niedrigeren Temperatur T_{K} über eine gesteuerte Ventileinrichtung 8 in mindestens einen pyroelektrischen Wandler 20, 22, wobei die Temperaturen T_{H} und T_{K} zu einem Temperaturfenster gehören, das unterhalb der Curie-Temperatur Tc des jeweils eingesetzten pyroelektrischen Materials 12 liegt,
- Übertragung der Wärme aus den Fluidströmen 9, 10 über einen Wärmeübertrager 2 direkt auf das zu spaltende Fluid 50, wobei die gesteuerte wechselnde Zuführung von Fluidströmen 9, 10 unterschiedlicher Temperatur T_{H} und T_{K} in den Wärmeübertrager 2 zur Steuerung des Wärme übernehmenden Fluids 50 für den Kreislauf 15 des jeweiligen pyroelektrischen Wandlers 20, 22 durchgeführt wird,
- Durchströmung mindestens eines pyroelektrisches Material enthaltenden Reaktors 3 mittels des zu spaltenden Fluids 50 als Wärmeträgermedium,
- Durchführung der Spaltung des zu spaltenden Fluids 50 in mindestens ein Spaltprodukt 48, 52 innerhalb mindestens eines Reaktors 3 unterhalb der Curie-Temperatur Tc des dortigen pyroelektrischen Materials in einem vorgegebenen Temperaturfenster, wobei installierte Temperatursensoren Messungen der Temperaturen zur jeweiligen Einhaltung des Abstandes zur Curie-Temperatur Tc sowie des Weiteren eine Steuerung der Temperaturfenster unterhalb der jeweiligen Curie-Temperatur Tc der pyroelektrischen Materialien durchführen,
- Realisierung von wechselnd geschaltetem Heizzyklus HZ und Kühlzyklus KZ in der Vorrichtung 1 mit vorgegebener Frequenz,
- Abtrennung mindestens eines der in dem Reaktor 3 erzeugten Spaltproduktes 48 in mindestens einer nachfolgenden Separationseinheit 43, 44.

Die Temperaturschwankungen der über die gesteuerte Ventileinrichtung 8 eingespeisten Fluidströme 9, 10 können zur Erwärmung und zur Kühlung des zu spaltenden Fluids 50 als Wärmeträgermedium im pyroelektrischen Wandler 20 eingesetzt werden.

Ein sofortiger Transport der Spaltprodukte 48 kann aus dem Reaktor 3 erfolgen.

Eine Aufrechterhaltung von zeitlichen Temperaturänderungen bzw. Temperaturschwankungen durch Absolvierung des Wechsels von Heizzyklus HZ und Kühlzyklus KZ kann innerhalb des vorgegebenen Temperaturfensters unterhalb der Curie-Temperatur Tc des jeweiligen pyroelektrischen Materials durchgeführt werden.

Die pyroelektrischen Materialien in den pyroelektrischen Materialeinheiten 12, 31, 32, 33 der Reaktoren 3 können in Strömungsrichtung beim Heizzyklus HZ so gestaffelt angeordnet sein, dass die Curie-Temperaturen Tc der pyroelektrischen Materialien mit der Abnahme der Temperatur des durchströmenden und zu spaltenden Fluids 50 abnehmen.

Eine Nutzung des zu spaltenden Fluids 50 als Reaktand und Wärmeträgermedium kann im Kreislauf 15 des pyroelektrischen Wandlers 20 erfolgen.

Innerhalb eines pyroelektrischen Wandlers 20, 22, 34, 35, 36 kann eine Einstellung einer Mitteltemperatur des zu spaltenden Fluids 50 in einem zweiten Wärmeübertrager 4 durch ein Puffermedium aus einer externen Puffermediumeinheit 13 durchgeführt werden.

Für den Fall, dass das Fluid 50 eine Flüssigkeit ist, kann mit Hilfe der Apparatur 5 in Form eines Membrankontaktors die im flüssigen Fluid 50 gelösten Spaltprodukte unmittelbar nach dem Reaktor 3 per Druckabsenkung aus der Flüssigkeit 50 heraus in die Gasphase überführt und abgezogen werden, wodurch die zu spaltende Flüssigkeit 50 damit regeneriert wird und innerhalb des Kreislaufs 15 wieder unbeladen für die Zuführung in den Reaktor 3 zur Verfügung steht.

Im pyroelektrischen Wandler 20, 22, 34, 35, 36 kann die Spaltreaktionen in sauren oder basischen Fluiden durchgeführt werden, wobei ein hinzugefügter Zusatzstoff wenigstens ein Spaltprodukt 48, 52 während des Prozesses reversibel bindet und dadurch auch für eine Trennung der Spaltprodukte 48, 52 sorgt, wobei eine Beeinflussung des pH-Wertes durch Zusatzstoffe die ablaufenden Redoxreaktionen im Reaktor 3 verbessert, wobei die Zusatzstoffe flüssig oder fest sein können.

Bei Vorliegen von Gas als das zu spaltende Fluid 50 kann die entsprechend ausgebildete Apparatur 5 mit einer selektiven Membran eine Gastrennung durchführen.

Im Reaktor 3 kann eine Spaltung gasförmiger Substanzen auch unter erhöhtem Druck durchgeführt werden.

Die Abtrennung eines Spaltproduktes 48, 52 kann mit vorgegebenen Adsorbentien oder Absorbentien durchgeführt werden.

Die vorgesehene Steuereinheit 18, in Fig. 2 dargestellt, kann im Wesentlichen zu einer gesteuerten Zuführung von z.B. Wasser als Fluid 49, 51 unterschiedlicher Temperatur T_{H} und T_{K} in den ersten Wärmeübertrager 2 letztendlich zur Steuerung des die Wärme übernehmenden Fluids 50 dienen. Die Steuereinheit 18 kann über Steuerleitungen 38 zumindest sowohl mit der Ventileinrichtung 8 als auch mit der Umwälzpumpe 6 verbunden sein.

Die beiden Fluidströme 51, 49 liegen in Bezug zueinander auf einem niedrigen Temperaturniveau T_{K} und auf einem hohen Temperaturniveau T_{H} vor, von denen wenigstens einer der beiden als Wärmestrom, z.B. 49 zu bewerten ist. Die primärseitigen Ströme 49, 51 werden abwechselnd mit einer anfangs vorgegebenen Ventilsteuerungs-Frequenz dem ersten Wärmeübertrager 2 zugeschaltet, der sekundärseitig in dem Kreislauf 15 integriert ist. In dem Kreislauf 15 wird das zu spaltende Fluid 50 kontinuierlich durch den ersten Wärmeübertrager 2, durch den Reaktor 3 mit pyroelektrischem Material 12, durch einen wahlweise eingebrachten zweiten Wärmeübertrager 4 und durch die angeschlossene Apparatur 5 gepumpt. Anhand des zweiten Wärmeübertragers 4 wird mit Hilfe eines tertiärseitig zugeführten Puffermediums aus der externen Puffermediumeinheit 13 im Fluid 50 eine bestimmte Zieltemperatur für den Prozessschritt der Entgasung der Spaltprodukte 48 eingestellt.

Im Falle eines Gases als das zu spaltende Fluid 50 kann der zweite Wärmeübertrager 4 in seiner Grundfunktion zur Verminderung der thermisch trägen Masse im Kreislauf 15 bleiben.

Vor Eintritt des Fluids 50 in die Umwälzpumpe 6 besteht gemäß Fig. 2 die Möglichkeit der Zufuhr von neuem frischem zu spaltendem Fluid 50 und gegebenenfalls prozessfördernder Zusätze über die Einrichtung 19. Außerdem kann der Sekundärkreislauf über eine Auslassleitung 21 bei Bedarf (teil-)entleert werden. Der geschilderte Aufbau wird nachfolgend als pyroelektrischer Wandler 20 gemäß Fig. 2 bezeichnet.

Es kann den pyroelektrischen Wandlern 20, 22 andererseits jeweils eine eigene Separationseinheit (nicht eingezeichnet) zugeordnet sein, deren Abführungen für die jeweiligen gleichen Spaltprodukte in einer Zusammenführungseinheit in Form einer Separationseinheit gebündelt sind, und aus der dann die definiert getrennten finalen Spaltprodukte auch zur weiteren Verarbeitung abgeführt werden.

Es können auch weitere parallel zu den beiden genannten Wandlern 20 und 22 und zur Ventileinrichtung 8 parallel verbundene pyroelektrische Wandler eingesetzt werden.

Beide in Fig. 1 angegebenen, Wärme an das Fluid 50 übergebenden Fluidströme 49, 51 fließen kontinuierlich durch ein der gesteuerten Ventileinrichtung 8 zugeordnetes Vier-Wege-Ventil, das wiederum mit den zwei pyroelektrischen Wandlern 20, 22 leitungsmäßig verbunden ist. Während der heiße Fluidstrom 49 mit der Temperatur T_{H} den einen Teil primärseitig durchspült, wird der andere Teil primärseitig mit dem kalten Fluidstrom 51 mit der Temperatur T_{K} durchströmt. Durch die Ventileinrichtung 8 kann eine schnelle Umschaltung der beiden Fluidströme 49 auf 51 und 51 auf 49 zwischen den pyroelektrischen Wandlern 20, 22 erfolgen. Dadurch lässt sich eine hohe Frequenz des Temperaturwechsels von T_{H} zu T_{K} und umgekehrt T_{K} zu T_{H} in den jeweiligen inneren Reaktoren der pyroelektrischen Wandler 20, 22 realisieren. Der Betrieb der zwei pyroelektrischen Wandler 20, 22 kann durch die wechselseitige Beschickung oder unterbrechungsfreie Nutzung der Fluidströme T_{K}, T_{H} als kontinuierlich betrachtet werden. Die erzeugten Spaltprodukte 48, 52 werden schließlich separiert, wobei der Prozessschritt der Trennung abhängig vom Auslegungsfall entweder je pyroelektrischem Wandler 20, 22 getrennt oder gemeinsam in der Separationseinheit 43 erfolgen kann.

In Fig. 3 sind schematische Darstellungen einer alternierenden Prozessabfolge von Heizzyklus HZ und Kühlzyklus KZ der Vorrichtung 1 eines dritten Ausführungsbeispiels gezeigt, bei der der in Fig. 2 dargestellte Reaktor 3 mehrere in Reihe angeordnete Reaktorsegmente 27, 28, 29, 30 umfassen kann, die jeweils mit pyroelektrischen Materialeinheiten 12, 31, 32, 33 ausgebildet sind und die derart angeordnet sind, dass sich die Curie-Temperatur Tc der vier pyroelektrischen Materialien in den pyroelektrischen Materialeinheiten 12, 31, 32, 33 über die vorgegebene Reaktorlänge L mit zugehörigen verschiedenen Curie-Temperaturen T_{C1}, T_{C2}, T_{C3}, T_{C4} mit T_{C1} > T_{C2} > T_{C3} > T_{C4} verringert.

Es sind in Fig. 3 nur vier Reaktorsegmente 27, 28, 29, 30 angegeben, jedoch kann die Anzahl der Reaktorsegmente vergrößert werden, solange die jeweilige zugehörige Curie-Temperatur Tc zur Kaskade passt.

Innerhalb des Reaktors 3 als Bestandteil des jeweiligen pyroelektrischen Wandlers 20 (Fig. 2) oder 22 sind die pyroelektrischen Materialien 12, 31, 32, 33 so angeordnet, dass deren Curie-Temperaturen Tc über die Reaktorlänge L, wie in Fig. 3 gezeigt ist, abnehmen. Während des Heizzyklus HZ strömt das heiße, zu spaltende Fluid 50h in einer definierten Strömungsrichtung durch den Reaktor 3 und kühlt sich auf diesem Weg ab. Die Temperatur des Fluids 50h liegt dabei immer unterhalb der Curie-Temperatur Tc der jeweiligen in Kontakt stehenden pyroelektrischen Materialien. Das jeweilige pyroelektrische Material und gegebenenfalls dessen Trägermaterial nehmen entsprechend ihrer Wärmekapazität außerdem einen Teil der Wärme aus dem Heizzyklus HZ auf. Während des anschließenden Kühlzyklus KZ durchströmt das kalte, zu spaltende Fluid 50k den Reaktor 3 mit den Reaktorsegmenten 30, 29, 28, 12 in umgekehrter Richtung. Es kommt dabei außerdem zur rekuperativen Aufheizung des Fluids 50k. Die Curie-Temperatur Tc der pyroelektrischen Materialien steigt aus Sicht der vorliegenden Strömungsrichtung des Fluids 50k an. Durch die Anordnung 53 der Reaktorsegmente 27, 28, 29, 30 lässt sich die pyrokatalytische Wirksamkeit der pyroelektrischen Materialien 12, 31, 32, 33 über die Reaktorlänge L maximieren. Folglich steigt auch die Ausbeute der Spaltprodukte. Durch die wechselseitige Durchspülung werden in jedem Reaktorsegment 27, 28, 29, 30 ähnliche Temperaturgradienten erreicht. Eine effiziente Nutzung der Wärme ist dadurch gegeben.

Fig. 4 zeigt eine Vorrichtung 1 eines vierten Ausführungsbeispiels in Abwandlung von Fig. 3.

In der in Fig. 4 gezeigten Vorrichtung 1 sind anstelle der in Reihe angeordneten und geschalteten Reaktorsegmente 27, 28, 29, 30 in jeweils einem Reaktor 3 mehrere pyroelektrische Wandler 34, 35, 36 mit jeweils einem Reaktor oder jeweils mehreren Reaktoren in der Art einer stufenförmigen Reihe in der Art des Reaktors 3 angeordnet und geschaltet, wobei die Reihenschaltung der pyroelektrischen Wandler 34, 35, 36 nach fallenden Curie-Temperaturen mit T_{C1} > T_{C2} >Tc₃ des jeweiligen pyroelektrischen Materials zugeordnet ist, wobei die pyroelektrischen Wandler 34, 35, 36 mit einem die pyroelektrischen Wandler 34, 35, 36 verbindenden Leitungssystem 37 eines Heizzyklus HZ für die Fluide 50h mit sich abkühlender Temperatur mit T_{H0} > T_{H1} > T_{H2} > T_{H3} und eines Kühlzyklus KZ für die Fluide 50k mit steigender Temperatur T_{K0} < T_{K1} < T_{K2} < T_{K3} in Verbindung stehen und jeder pyroelektrische Wandler 34, 35, 36 abgehende Leitungen 39, 40, 41 zur Abführung von jeweils mindestens einem Spaltprodukt aufweist. Während des Heizzyklus HZ durchströmt anfangs ein heißes zu spaltendes Fluid 50h mit der vom Fluidstrom 49 übernommenen Temperatur T_{H0} die pyroelektrischen Wandler 34, 35, 36. Dieses Fluid 50h - mit der übernommenen Außentemperatur T_{H0} - kühlt sich in jeder Stufe durch Wärmeübertragung auf die pyroelektrischen Materialien ab, so dass das Fluid 50h nach der ersten Stufe mit der Temperatur T_{H1}, nach der zweiten Stufe mit der Temperatur T_{H2} usw. vorliegt. In Fig. 4 ist die Verschaltung mit drei Stufen illustriert, wobei sich die Verschaltung auf n Stufen erweitern lässt. Während des Kühlzyklus KZ durchströmt anfangs kaltes zu spaltendes Fluid 50k mit der vom Fluidstrom 51 übernommenen Temperatur T_{K0} in entgegen gesetzter Richtung die Kaskade der pyroelektrischen Wandler 36, 35, 34. Wie bereits zur Fig. 3 geschrieben, kommt es dadurch zu einer allmählichen Aufheizung der Fluidtemperatur von T_{K0} über jede Stufe bis zu T_{K3}. Die Curie-Temperatur T_{C1}, T_{C2}, T_{C3} der jeweils verwendeten pyroelektrischen Materialien ist in den einzelnen Stufen bzw. pyroelektrischen Wandlern 34, 35, 36 an die vorherrschenden Temperaturniveaus T_{H0}, T_{H1}, T_{H2} und T_{K0}, T_{K1}, T_{K2} mit T_{H0} - T_{K2} im pyroelektrischen Wandler 34 und mit T_{H1} - T_{K1} im pyroelektrischen Wandler 35 und mit T_{H2} - T_{K0} im pyroelektrischen Wandler 36 in Fig. 4 angepasst, wie in Fig. 3 auch gezeigt ist. Alle entstehenden Spaltprodukte 39, 40, 41 können analog zu Fig. 1 entweder getrennt separiert oder gesammelt separiert werden.

Sowohl für die Parallelschaltung als auch die Reihenschaltung von pyroelektrischen Wandlern können n (mit n = 1, 2, 3 ... N) pyroelektrische Wandler in der erfindungsgemäßen Vorrichtung 1 eingesetzt werden.

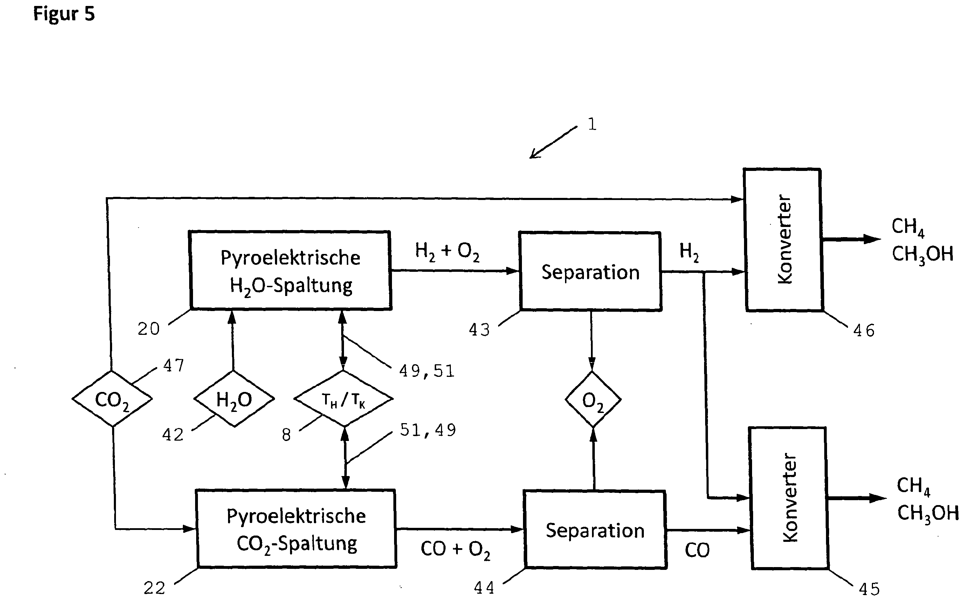

In Fig. 5 ist eine schematische Darstellung einer weiteren Vorrichtung 1 insbesondere für die Stoffwandlung von Kohlendioxid CO₂ unter Einbeziehung von pyroelektrischen Materialien dargestellt.

Die Vorrichtung 1 umfasst zumindest
- einen ersten pyroelektrischen Wandler 20 zur Wasser-H₂O-Spaltung in die Spaltprodukte Wasserstoff H₂ und Sauerstoff O₂ aus dem zu spaltenden Fluid Wasser H₂O, das aus einer externen ersten H₂O-Quelle 42 entnommen wird,
- einen zweiten pyroelektrischen Wandler 22 zur Kohlendioxid-Wasserstoff-Spaltung in die Spaltprodukte Kohlenmonoxid CO und Sauerstoff O₂ aus dem zu spaltenden Fluid CO₂, dass aus einer externen zweiten CO₂-Quelle 47 entnommen wird,
- eine Ventileinrichtung 8,
- eine dem ersten pyroelektrischen Wandler 20 nachgeordnete erste Separationseinheit 43 zur Separierung von Wasserstoff H₂ und Sauerstoff O₂,
- eine dem zweiten pyroelektrischen Wandler 22 nachgeordnete zweite Separationseinheit 44 zur Separierung von Kohlenmonoxid CO und Sauerstoff O₂,
- zumindest einen ersten der zweiten Separationseinheit 44 nachgeordneten ersten Konverter 45 zur Synthese von Kohlenmonoxid CO und Wasserstoff H₂ zu Methan CH₄ und Methanol CH₃OH.

Des Weiteren kann die Vorrichtung 1 zumindest einen zweiten der ersten Separationseinheit 43 nachgeordneten zweiten Konverter 46 zur Synthese von Kohlendioxid CO₂ und Wasserstoff H₂ zu Methan CH₄ und zu Methanol CH₃OH enthalten.

Auch die Konverter 45, 46 können pyroelektrisches Material insbesondere zur katalytischen Unterstützung der genannten Synthese aufweisen.

Das Kohlendioxid CO₂ stammt hierbei aus einem externen Prozess. Ziel ist die Umwandlung des Kohlendioxids CO₂ mit Wasserstoff H₂ zu Methan CH₄ und/oder zu Methanol CH₃OH. Diese Nutzung kann dadurch erfolgen, dass Ströme 49 mit hoher Temperatur T_{H} und Ströme 51 mit niedriger Temperatur T_{K} dazu genutzt werden, sowohl Wasser H₂O als auch Kohlendioxid CO₂ zu spalten. Durch Wasserspaltung im ersten pyroelektrischen Wandler 20 kann der benötigte Wasserstoff H₂ erzeugt werden. Kohlenstoffdioxid CO₂ kann in einem weiteren zweiten pyroelektrischen Wandler 22 zu Kohlenmonoxid CO und Sauerstoff O₂ zersetzt werden. Nach der Abtrennung des entstehenden Sauerstoffs O₂ ist die Synthese des Wasserstoffs H₂ und des Kohlenmonoxids CO zu Methan CH₄ und/oder zu Methanol CH₃OH in dem ersten Konverter 45 möglich. Alternativ kann Kohlendioxid CO₂ auch direkt in dem zweiten Konverter 46 mit pyroelektrisch erzeugten Wasserstoff H₂ zu Methan CH₄ und/oder Methanol CH₃OH, wie in der Druckschrift DE 10 2009 048 121 A1 beschrieben ist, umgesetzt werden.

Mit der Erfindung können mehrere Vorteile gegenüber dem Stand der Technik angegeben werden, wobei nachfolgend im Wesentlichen das Verfahren und die zugehörigen Funktionsweisen der Vorrichtungen 1 erläutert werden.

Der Prozess, d.h. die Verfahren und die zugehörigen Vorrichtungen, der pyroelektrischen Spaltung von chemischen Verbindungen wird dahingehend modifiziert, dass die Wärme (Primärseite) über einen Wärmeträger direkt vom zu spaltenden Fluid entzogen wird und das zu spaltende Fluid als Wärmeträgermedium (Sekundärseite) einen Reaktor mit dem pyroelektrischen Material ohne Kammeraufteilung kontinuierlich durchströmt.

Im Falle einer flüssigen Phase - wie dem Wasser - ist im Reaktor vorgesehen, dass die Abtrennung der gelösten Spaltprodukte gezielt bzw. kontrolliert in einem separaten Prozessschritt erfolgt. Der gesamte Prozess findet im geschlossenen Kreislauf 15 statt. Die Prozessführung im Reaktor 3 erfolgt unterhalb der Curie-Temperatur des eingesetzten pyroelektrischen Materials in einem engen Temperaturfenster, um so den größtmöglichen pyroelektrischen Koeffizient (entspricht einer pyrokatalytischen Wirksamkeit) zu nutzen und Heiz-/Kühlzyklen mit höchster Frequenz zu realisieren.
1) Ohne Kammeraufteilung und ohne Elektrodenaufbau entsteht für die Reaktionszone ein weitaus größerer Gestaltungsspielraum. Eine ausgezeichnete Orientierung der pyroelektrischen Materialien muss dann nicht mehr gefordert werden, so dass deren Ausrichtung und Aufbau in vorgegebener Weise auftreten darf.
2) Für die Wahl des pyroelektrischen Materials können einerseits pyroelektrische Folien (glatt/aufgeraut), andererseits zerkleinerte pyroelektrische Kristalle oder als Mikro- oder Nanopartikel synthetisierte pyroelektrische Partikel sowie geeignete Kombinationen dieser genutzt werden. Folien lassen sich für eine optimale Raumausnutzung systematisch anordnen, z.B. gewickelt oder gefaltet. Lose Partikel können als Beschichtungen auf Trägerstrukturen aufgebracht werden. Die Bindung zwischen Partikel und Trägermaterial kann durch Sol-Gel-Beschichtung, Klebung, Pressung und Sintern realisiert werden. Dabei können als Trägermaterial sowohl poröse Materialien, wie funktionalisierte Keramiken oder Schäume, als auch Träger gleicher Geometrie (Füllkörper) mit hoher spezifischer Oberfläche eingesetzt werden. Dadurch wird die nutzbare Oberfläche bzw. Wärmeübertragungsfläche erhöht und gleichzeitig der Bedarf an pyroelektrischem Material verringert.
3) Nach dem Stand der Technik dienen die äußeren Flächen des mit pyroelektrischem Material versehenen Elements gleichzeitig zur räumlichen Trennung der Spaltprodukte. Die Anordnung nach dem Stand der Technik limitiert die nutzbare aktive Oberfläche. In einem Quader beispielsweise mit einem Volumen von 1 m³, in dem 1 cm dicke Platten mit pyroelektrischem Material parallel angeordnet sind, ist die aktive Oberfläche in Summe kleiner als 200 m². Eine Schüttung gleichen Volumens mit Trägerkugeln eines Durchmessers von 1 cm (47,64 % Lückenvolumen bei kubischer Packung) verfügt bereits über eine größere Oberfläche von 314 m². Gegenüber dem Stand der Technik kann damit eine Steigerung der aktiven Oberfläche realisiert werden. Durch Beschichtung eines porösen Metallschaums mit einer realisierbaren volumenbezogenen Oberfläche von 1000 m²/m³ lässt sich eine noch weitere Oberflächenvergrößerung erzielen.
4) Die Materialien von Trägerstruktur sowie Haftvermittler weisen eine Wärmeleitfähigkeit, aber eine geringe Wärmekapazität auf und bleiben im angewendeten Temperaturbereich beständig. Im Falle einer Degradation des pyroelektrischen Materials ist ein zügiger Austausch möglich, was die Auslastung der erfindungsgemäßen Vorrichtung erhöht bzw. die Wartungszeiten verringert.
5) Die kontinuierliche Durchströmung des Reaktors mit dem Fluid sorgt unabhängig vom Strömungsregime in der Reaktionszone bzw. entlang der aktiven Oberfläche für eine verbesserte Wärme- und Stoffübertragung. Bei einer Durchmischung, die beispielsweise beschichtete Füllkörper bzw. poröse Materialien aufgehäuft zu einem Reaktorbett verursachen, wird der genannte Austausch noch intensiviert. Zudem werden die auftretenden oder ins Fluid gegangenen Spaltprodukte sofort aus dem Reaktor abgeführt. Dadurch bleibt das Triebkraftpotenzial unmittelbar an der Reaktionszone für den nachfließenden Strom des zu spaltenden Fluids erhalten.
6) Die primärseitig anfallende Wärme eines externen Prozesses wird über einen Wärmeübertrager (z.B. Plattenwärmeübertrager) ausgekoppelt. Die Temperaturschwankungen des anfallenden Abwärmestroms (beispielsweise bei transientem Betrieb der Wärmequelle) können zur Erwärmung und zur Kühlung des zu spaltenden Fluids über den Wärmeübertrager genutzt werden. Eine andere Möglichkeit ist es, einen Stoffstrom niedriger Temperatur im Wechsel zuzuschalten, wie in Fig. 1 und Fig. 2 gezeigt ist. Mit der gleichzeitigen Nutzung des zu spaltenden Fluids als Reaktand und Wärmeträgermedium wird der Einfluss der thermisch trägen Masse im Reaktor reduziert, weil das Fluid im Wärmeübertrager sekundärseitig effektiv erwärmt bzw. abgekühlt und schnell zum Reaktor hingeführt bzw. von selbigen abgeführt wird. Nach dem Reaktor erfolgt für das Fluid mit einem weiteren Wärmeübertrager durch eine Pufferflüssigkeit (z.B. Brauchwasser) die Einstellung einer bestimmten Mitteltemperatur. Diese verringert zusätzlich die thermische Trägheit der Masse und sorgt im Falle einer Flüssigkeit für die Einhaltung der erforderlichen Zieltemperatur während der Gasauskopplung. Insgesamt reduziert sich die Temperaturwechselzeit an der aktiven Oberfläche und die Frequenz des Wechsels von Heizzyklus zu Kühlzyklus steigt, wodurch der pyroelektrische Effekt effektiver genutzt wird.
7) Die Prozessführung muss zumindest durch eine zeitliche Temperaturänderung/-schwankungen im pyroelektrischen Material charakterisiert sein. Diese kann beispielsweise eine lineare Zunahme/Abnahme oder eine lineare Zunahme/Abnahme moduliert mit einer Sinus-/Cosinus-Funktion oder durch komplexere Verläufe (Überlagerung von harmonischen Funktionen oder komplexeren mathematischen Funktionen) sein. Die genannten Varianten lassen sich bei entsprechender Regelung der Durchflussmengen primärseitig wie sekundärseitig realisieren.
8) Bei der Übertragung der Wärme eines strömenden Fluids 50 auf einen kühleren Festkörper im Reaktor 3 kommt es zur Abkühlung des Fluids 50 entlang der Strömungsrichtung. Folglich bildet sich entlang des Strömungswegs ein Temperaturgradient aus. Adaptiert auf den Reaktor 3, wird eine verbesserte Nutzung der Wärme (Energie) erreicht, indem verschiedene pyroelektrische Materialien in Strömungsrichtung gestaffelt so angeordnet sind, dass die Curie-Temperaturen Tc der pyroelektrischen Materialien mit der Abnahme der Temperatur des durchströmenden und zu spaltenden Fluids 50h ebenfalls abnehmen, wie in Fig. 3 gezeigt ist. Dies ist von besonderem Vorteil, da der pyroelektrische Koeffizient unterhalb und in unmittelbarer Nähe vor der Curie-Temperatur Tc innerhalb weniger Bruchteile von Kelvin zur Curie-Temperatur Tc steil ansteigt. Der pyroelektrische Koeffizient kann dort unter Umständen um Größenordnungen höher sein als einzelne Kelvin unterhalb der Curie-Temperatur Tc.
9) Alternativ oder zusätzlich zum Einsatz von Phasengemischen im Reaktor, d.h. Mischung von kristallinen Stoffen mit unterschiedlichen Curie-Temperaturen, lässt sich die Nutzung des Wärmestroms auch durch eine Verschaltung des Grundaufbaus eines pyroelektrischen Wandlers 20, wie in Fig. 2 gezeigt ist, anpassen. Dazu wird der anfallende Wärmestrom primärseitig über mehrere aufeinanderfolgende Wärmeübertrager geleitet, wie in Fig. 3 und Fig. 4 gezeigt ist. Diese sind sekundärseitig jeweils in den pyroelektrischen Wandler eingebunden. Innerhalb des jeweiligen Reaktors befindet sich pyroelektrisches Material, dessen Curie-Temperatur/en Tc an das entsprechend ausgekoppelte Temperaturniveau angepasst ist/sind. Folglich wird eine Umsatzsteigerung im Prozess erzielt.
10) Durch die Abführung des pyrokatalytisch wechselwirkenden Fluids aus dem Reaktor werden die entstandenen oder in Lösung gegangenen Spaltprodukte ebenfalls abtransportiert. Der Volumenstrom lässt sich anhand der Umwälzpumpe so gestalten, dass die Verweilzeit im Reaktor kurz bleibt bzw. im Falle der Flüssigkeit die Beladungskapazität des Fluids (bei maximaler Löslichkeit eines Gases in der Flüssigkeit) stets unterschritten wird und es zu keiner Gasbläschenbildung im pyroelektrischen Wandler kommt. Ein Gasraum im Reaktor bzw. im pyroelektrischen Wandler fällt somit weg (kein Totraum mehr vorhanden). Mit Hilfe der Apparatur 5 mit beispielsweise einem Membrankontaktor können die gelösten Spaltprodukte unmittelbar nach dem Reaktor per Druckabsenkung aus der Flüssigkeit heraus in die Gasphase überführt und abgezogen werden. Die zu spaltende Flüssigkeit wird damit regeneriert und steht wieder unbeladen für die Zuführung in den Reaktor zur Verfügung. Liegt das zu spaltende Fluid gasförmig vor, entfällt der Prozessschritt einer Gasauskopplung. Für das in beiden Fällen pyrokatalytisch generierte Gas kann im Falle des Vorliegens eines Gasgemisches eine geeignete Gastrennung z.B. mit einer selektiven Membran erfolgen.
11) Zusätzlich besteht die Möglichkeit, die Spaltreaktionen in sauren oder basischen Fluiden durchzuführen. Beispielsweise derart, dass eine hinzugefügte Komponente (flüssig oder fest, z.B. Elemente der Alkali-, der Erd-alkali-, der Übergangsmetall- oder Seltenerdmetalle) wenigstens ein Spaltprodukt während des Prozesses reversibel bindet und dadurch auch für eine gewisse Trennung der Spaltprodukte sorgt. Daneben können auch geeignete Adsorbentien und Absorbentien für die in-situ-Abtrennung eingesetzt werden. Bei zwei oder mehr Spaltprodukten würde somit die Gastrennung nach dem Membrankontaktor (Gasauskopplung) entfallen. Die Beeinflussung des pH-Wertes durch geeignete Zusätze kann zusätzlich die ablaufenden Redoxreaktionen am Reaktor begünstigen.
12) Das zu spaltende Fluid kann im Falle eines Gases entweder direkt, im Wärmestrom des externen Prozesses, enthalten dem Reaktor zugeführt werden oder im pyroelektrischen Wandler als Wärmeträgermedium sekundärseitig zirkuliert werden.
   Als gasförmige chemische Substanzen kommen Rauchgase oder chemische Verbindungen in Reinform, z.B. Kohlendioxid CO₂ in Frage. Unter letzteren Punkt fällt als konkretes Beispiel der Wasserdampf H₂O. Durch Nutzung von Wasserdampf kann die benötigte Energie zur Wasserspaltung an der Oberfläche der pyroelektrischen Materialien reduziert werden. Die Spaltung gasförmiger Substanzen lässt sich ebenfalls unter erhöhtem Druck durchführen, um größere Massenströme bei gegebenen Reaktorvolumen zu realisieren. Somit ist außerdem eine Kompression der Produktgase zur anschließenden Speicherung bereits gegeben.
   Zusätzlich kann im Betrieb unter Druck die Abtrennung eines Spaltproduktes über eine Membran erfolgen, um einerseits die Spaltprodukte abzuführen und andererseits den Umsatz nach dem Prinzip von Le Chatelier zu erhöhen. Die dafür benötigten Membranen können Polymere, die in der Druckschrift WO 2008/046880 A1 beschrieben sind, oder Keramiken, die in der Druckschrift EP 2 457 635 A1 beschrieben sind, sein. Alternativ zur Membran eignet sich auch der Einsatz von geeigneten Adsorbentien oder Absorbentien.

Zur verbesserten Funktion der erfindungsgemäßen Vorrichtungen 1 kann die eingesetzte Steuereinheit 18 neben der Durchführung der bereits genannten Vorgänge zumindest mit installierten Temperatursensoren in Verbindung stehen, die an Komponenten der jeweiligen Bauteile/Baugruppen angebracht sind und die mit in ihr gespeicherten oder zugeordneten programmtechnischen Mitteln zumindest Messungen der Temperaturen zur jeweiligen Einhaltung des Abstandes zur Curie-Temperatur Tc sowie des Weiteren eine Steuerung der Temperaturfenster unterhalb der jeweiligen Curie-Temperatur Tc der pyroelektrischen Materialien durchführt.

### Bezugszeichenliste

- 1: Vorrichtung
- 2: Erster Wärmeübertrager
- 3: Reaktor
- 4: Zweiter Wärmeübertrager
- 5: Apparatur
- 6: Umwälzpumpe
- 7: Erste Zuführungsleitung
- 8: Ventileinrichtung
- 9: Anliegender Fluidstrom mit hoher Temperatur T_{H}
- 10: Anliegender Fluidstrom mit niedriger Temperatur T_{K}
- 11: Abflussleitung
- 12: Pyroelektrische Materialeinheit
- 13: Puffermediumeinheit
- 14: Leitung zur Abgabe von Spaltprodukten
- 15: Kreislauf
- 16: Leitungssystem
- 17: Puffermedium
- 18: Steuereinheit
- 19: Einrichtung
- 20: Erster pyroelektrischer Wandler
- 21: Ausflussleitung
- 22: Zweiter pyroelektrischer Wandler
- 23: Abflussleitung
- 24: Zweite Leitung zur Abgabe von Spaltprodukten
- 25: Leitung zur Abführung eines ersten definierten Spaltproduktes
- 26: Leitung zur Abführung eines zweiten definierten Spaltproduktes
- 27: Erstes Reaktorsegment
- 28: Zweites Reaktorsegment
- 29: Drittes Reaktorsegment
- 30: Viertes Reaktorsegment
- 31: Pyroelektrische Materialeinheit
- 32: Pyroelektrische Materialeinheit
- 33: Pyroelektrische Materialeinheit
- 34: Pyroelektrischer Wandler
- 35: Pyroelektrischer Wandler
- 36: Pyroelektrischer Wandler
- 37: Erstes Leitungssystem
- 38: Elektrische Steuerleitungen
- 39: Leitung zur Abführung von Spaltprodukten
- 40: Leitung zur Abführung von Spaltprodukten
- 41: Leitung zur Abführung von Spaltprodukten
- 42: Erste externe Fluidquelle
- 43: Erste Separationseinheit
- 44: Zweite Separationseinheit
- 45: Erster Konverter
- 46: Zweiter Konverter
- 47: Zweite externe Fluidquelle
- 48: Erstes Spaltprodukt
- 49: Fluid mit hoher Temperatur T_{H}
- 50: zu spaltendes Fluid
- 50h: Heißes zu spaltendes Fluid
- 50k: Kaltes zu spaltendes Fluid
- 51: Fluid mit niedriger Temperatur T_{K}
- 52: Zweites Spaltprodukt
- 53: Anordnung der Reaktorsegmente

- HZ: Heizzyklus
- KZ: Kühlzyklus
- T_{C}: Curie-Temperatur eines pyroelektrischen Materials

## Patentansprüche

1. Vorrichtung (1) zur Energie- und Stoffwandlung mittels pyroelektrischer Materialien zur Herstellung von Spaltprodukten aus Fluiden (50), umfassend
- zumindest mindestens zwei pyroelektrische Wandler (20, 22), die in Bezug auf eine gesteuerte Ventileinrichtung (8) zueinander geschaltet sind und die jeweils eine Abflussleitung (11, 23) aufweisen, wobei ein erster pyroelektrischer Wandler zur Wasserspaltung in die Spaltprodukte Wasserstoff und Sauerstoff geeignet ist und ein zweiter pyroelektrischer Wandler zur Kohlendioxidspaltung in die Spaltprodukte Kohlenmonoxid und Sauerstoff geeignet ist,
- mindestens eine dem ersten pyroelektrischen Wandler (20) zugeordnete Leitung (14) zur Abführung von Spaltprodukten (48, 52),
- mindestens eine dem zweiten pyroelektrischen Wandler (22) zugeordnete Leitung (24) zur Abführung von Spaltprodukten (52, 48),
wobei ein pyroelektrischer Wandler (20, 22) zumindest enthält
- einen ersten Wärmeübertrager (2), der mit einer Zuführungsleitung (7) verbunden ist, der mindestens eine mit der Zuführungsleitung (7) in Verbindung stehende Abflussleitung (11) besitzt und durch den ein Wärme übernehmendes, zu spaltendes Wasser oder Kohlendioxid enthaltendes Fluid (50) strömt,
- mindestens einen Reaktor (3) zur Spaltung des Wasser oder Kohlendioxid enthaltenden Fluids (50) in dessen Spaltprodukte (48, 52), wobei der Reaktor (3) zumindest ein pyroelektrisches Material (12) mit einer vorgegebenen Curie-Temperatur Tc aufweist,
- mindestens ein zweiter Wärmeübertrager (4) im pyroelektrischen Wandler (20, 22), der mit einer externen Puffermediumeinheit (13) zur Einstellung einer mittleren Temperatur verbunden ist,
- eine Apparatur zur Gasphasenüberführung und/oder Gastrennung (5), aus der mindestens die Leitung (14) zur Abführung mindestens eines im Reaktor (3) erzeugten Spaltprodukts (48, 52) geführt ist,
wobei die Vorrichtung (1) mindestens eine den pyroelektrischen Wandlern (20, 22) zugeordnete Separationseinheit (43) zur Separierung der aus der dem jeweiligen Reaktor (3) nachgeordneten Apparatur zur Gasphasenüberführung und/oder Gastrennung (5) abgeführten finalen Spaltprodukte (48, 52) umfasst und die Leitungen (14, 24) zur kontrollierten Abführung der Spaltprodukte (48, 52) in die Separationseinheit (43) münden, aus der zumindest Leitungen (25, 26) zur Abführung von getrennten finalen Spaltprodukten (48, 52) führen, **dadurch gekennzeichnet,**
**dass** die Ventileinrichtung (8) zu einer wechselseitigen mit einer vorgegebenen Ventilsteuerungs-Frequenz geschalteten Zuführung von mindestens einem Fluidstrom (9) mit einer hohen Temperatur T_{H} und von mindestens einem Fluidstrom (10) mit einer zur Temperatur T_{H} niedrigeren Temperatur T_{K} vorgesehen ist, und
eine gesteuerte Umwälzpumpe (6) vorhanden ist, die innerhalb eines in den pyroelektrischen Wandlern (20, 22) vorhandenen Kreislaufs (15) mit den zum Kreislauf (15) gehörenden und miteinander verbundenen Wärmeübertrager (2), Reaktor (3) und Apparatur zur Gasphasenüberführung und/oder Gastrennung (5) angeordnet ist und die den Kreislauf (15) über ein den Kreislauf (15) verbindendes Leitungssystem (16) mit fließendem und zu spaltendem Wasser oder Kohlendioxid enthaltenden Fluid (50) versorgt, wobei die Umwälzpumpe (6) mit der gesteuerten Ventileinrichtung (8) extern über eine Steuereinheit (18) in Verbindung steht.

2. Vorrichtung nach Anspruch 1,
**dadurch gekennzeichnet,**
**dass** im pyroelektrischen Wandler (20, 22) für ein zu spaltendes Wasser oder Kohlendioxid enthaltendes Fluid (50) im Kreislauf (15) zwischen der Apparatur zur Gasphasenüberführung und/oder Gastrennung (5) und der gesteuerten Umwälzpumpe (6) eine mit Ventilen ausgebildete Einrichtung (19) zur Zuführung von zu spaltendem Wasser oder Kohlendioxid enthaltendem Fluid (50) und von wahlweise in das Wasser oder Kohlendioxid enthaltende Fluid (50) einfügbaren Zusatzstoffen mit einer zugehörigen Ausflussleitung (21) angeordnet ist.

3. Vorrichtung nach den Ansprüchen 1 bis 2,
**dadurch gekennzeichnet,**
**dass** ein Reaktor (3) eines pyroelektrischen Wandlers (20, 22) mehrere Reaktorsegmente (27, 28, 29, 30) umfasst, die jeweils mit einer pyroelektrischen Materialeinheit (12, 31, 32, 33) ausgebildet und die derart angeordnet sind, dass sich die jeweilige Curie-Temperatur T_{C1}, T_{C2}, T_{C3}, T_{C4} der pyroelektrischen Materialien in den pyroelektrischen Materialeinheiten (12, 31, 32, 33) über die Reaktorlänge L des Reaktors (3) mit T_{C1} > T_{C2} > T_{C3} > Tc4 verringert.

4. Vorrichtung nach Anspruch 1,
**dadurch gekennzeichnet,**
**dass** mindestens der erste pyroelektrische Wandler (20) und ein zweiter pyroelektrischen Wandler (22) in Bezug auf die gesteuerte Ventileinrichtung (8) parallel zueinander geschaltet sind.

5. Vorrichtung nach den Ansprüchen 1 bis 2,
**dadurch gekennzeichnet,**
**dass** mehrere pyroelektrische Wandler (34, 35, 36) in der Art einer temperaturbezogenen stufenförmigen Reihe angeordnet und geschaltet sind, wobei die Reihenschaltung der pyroelektrischen Wandler (34, 35, 36) nach fallender Curie-Temperaturen mit T_{C1} > T_{C2} >Tc₃ des jeweiligen pyroelektrischen Materials zugeordnet ist, wobei
die pyroelektrischen Wandler (34, 35, 36) mit einem die pyroelektrischen Wandler (34, 35, 36) verbindenden Leitungssystem (37) eines Heizzyklus HZ für die Fluide (50h) mit sich abkühlender Temperatur mit T_{H0} > T_{H1} > T_{H2} > T_{H3} und eines Kühlzyklus KZ für die Fluide (50k) mit steigender Temperatur T_{K0} < T_{K1} < T_{K2} < T_{K3} in Verbindung stehen und jeder pyroelektrische Wandler (34, 35, 36) Leitungen (39, 40, 41) zur Abführung von jeweils mindestens einem Spaltprodukt aufweist.

6. Vorrichtung nach Anspruch 1,
**dadurch gekennzeichnet,**
**dass** sie zumindest umfasst
- den ersten pyroelektrischen Wandler (20) zur Wasser-H₂O-Spaltung in die Spaltprodukte Wasserstoff H₂ und Sauerstoff O₂ aus dem zu spaltenden Fluid Wasser H₂O aus einer externen ersten H₂O-Quelle (42),
- den zweiten pyroelektrischen Wandler (22) zur Kohlendioxid-CO₂-Spaltung in die Spaltprodukte Kohlenmonoxid CO und Sauerstoff O₂ aus dem zu spaltenden Kohlendioxid CO₂ aus einer externen zweiten CO₂-Quelle (47),
- die dem ersten pyroelektrischen Wandler (20) nachgeordnete Separationseinheit (43) zur Separierung von Wasserstoff H₂ und Sauerstoff O₂,
- eine dem zweiten pyroelektrischen Wandler (22) nachgeordnete zweite Separationseinheit (44) zur Separierung von Kohlenmonoxid CO und Sauerstoff O₂,
- zumindest einen ersten der zweiten Separationseinheit (44) nachgeordneten Konverter (45) zur Synthese von Kohlenmonoxid CO und Wasserstoff H₂ zu Methan CH₄ und/oder zu Methanol CH₃OH.

7. Vorrichtung nach Anspruch 6,
**dadurch gekennzeichnet,**
**dass** die Vorrichtung (1) zumindest einen zweiten der ersten Separationseinheit (43) nachgeordneten Konverter (46) zur Synthese von Kohlendioxid CO₂ und Wasserstoff H₂ zu Methan CH₄ und/oder zu Methanol CH₃OH aufweist.

8. Vorrichtung nach den Ansprüchen 6 oder 7,
**dadurch gekennzeichnet,**
**dass** die Konverter (45, 46) pyroelektrisches Material aufweisen.

9. Vorrichtung nach den Ansprüchen 1 bis 8,
**dadurch gekennzeichnet,**
**dass** die eingesetzte Steuereinheit (18) zumindest mit Temperatursensoren in Verbindung steht.

10. Verfahren zur Energie- und Stoffwandlung mittels pyroelektrischer Materialien zur Herstellung von Spaltprodukten aus Wasser oder Kohlendioxid enthaltenden Fluiden (50) unter Einsatz einer Vorrichtung (1) nach den Ansprüchen 1 bis 9,
durch zumindest folgende Schritte gekennzeichnet:
- wechselseitige Zuführung von mindestens einem Fluidstrom (9) mit der hohen Temperatur T_{H} und von mindestens einem Fluidstrom (10) mit einer zur Temperatur T_{H} niedrigeren Temperatur T_{K} über eine gesteuerte Ventileinrichtung (8) in mindestens einen pyroelektrischen Wandler (20, 22), wobei die Temperaturen T_{H} und T_{K} zu einem Temperaturfenster gehören, das unterhalb der Curie-Temperatur Tc des jeweils in einem Reaktor (3) eingesetzten pyroelektrischen Materials (12) liegt,
- Übertragung der Wärme aus den Fluidströmen (9, 10) über einen Wärmeübertrager (2) direkt auf das zu spaltende Wasser oder Kohlendioxid enthaltende Fluid (50), wobei die gesteuerte wechselnde Zuführung von Fluidströmen (9, 10) unterschiedlicher Temperatur T_{H} und T_{K} in den Wärmeübertrager (2) zur Steuerung des Wärme übernehmenden Wasser oder Kohlendioxid enthaltenden Fluids (50) für einen Kreislauf (15) in einem pyroelektrischen Wandler (20, 22) durchgeführt wird,
- Durchströmung mindestens eines Reaktors (3) mit pyroelektrischem Material mittels des zu spaltenden Wasser oder Kohlendioxid enthaltenden Fluids (50) als Wärmeträgermedium,
- Durchführung der Spaltung des zu spaltenden Wasser oder Kohlendioxid enthaltenden Fluids (50) in mindestens ein Spaltprodukt (48, 52) innerhalb mindestens eines Reaktors (3) unterhalb der Curie-Temperatur Tc des dortigen pyroelektrischen Materials in einem vorgegebenen Temperaturfenster, wobei die Temperatursensoren Messungen der Temperaturen zur jeweiligen Einhaltung des Abstandes zur Curie-Temperatur Tc sowie des Weiteren eine Steuerung der Temperaturfenster unterhalb der jeweiligen Curie-Temperatur Tc der pyroelektrischen Materialien durchführen,
- Realisierung von wechselnd geschaltetem Heizzyklus HZ und Kühlzyklus KZ in der Vorrichtung (1) mit vorgegebener Frequenz,
- Einstellung einer Mitteltemperatur des zu spaltenden Wasser oder Kohledioxid enthaltenden Fluids (50) in einem zweiten Wärmeübertrager (4) durch ein Puffermedium aus einer externen Puffermediumeinheit (13) innerhalb eines pyroelektrischen Wandlers (20, 22, 34, 35, 36),
- Abtrennung mindestens eines der in dem Reaktor (3) erzeugten Spaltproduktes (48) in mindestens einer nachfolgenden Separationseinheit (43, 44).

11. Verfahren nach Anspruch 10,
**dadurch gekennzeichnet,**
**dass** die Temperaturschwankungen der über die gesteuerte Ventileinrichtung (8) eingespeisten Fluidströmen (9, 10) zur Erwärmung und zur Kühlung des zu spaltenden Wasser oder Kohlendioxid enthaltenden Fluids (50) als Wärmeträgermedium im pyroelektrischen Wandler (20, 22) eingesetzt werden.

12. Verfahren nach Anspruch 10,
**dadurch gekennzeichnet,**
**dass** ein sofortiger Transport der Spaltprodukte (48) aus dem Reaktor (3) erfolgt.

13. Verfahren nach Anspruch 10 oder 11,
**dadurch gekennzeichnet,**
**dass** eine Aufrechterhaltung von zeitlichen Temperaturänderungen/- schwankungen durch Absolvierung des Wechsels von Heizzyklus HZ und Kühlzyklus KZ innerhalb eines vorgegebenen Temperaturfensters unterhalb der Curie-Temperatur Tc des jeweiligen pyroelektrischen Materials durchgeführt wird.

14. Verfahren nach den Ansprüchen 10 bis 13,
**dadurch gekennzeichnet,**
**dass** die pyroelektrischen Materialien in den pyroelektrischen Materialeinheiten (12, 31, 32, 33) der Reaktoren (3) in Strömungsrichtung beim Heizzyklus HZ so gestaffelt angeordnet sind, dass die Curie-Temperaturen Tc der pyroelektrischen Materialien mit der Abnahme der Temperatur des durchströmenden und zu spaltenden Wasser oder Kohlendioxid enthaltenden Fluids (50) abnehmen.

15. Verfahren nach Anspruch 10,
**dadurch gekennzeichnet,**
**dass** eine Nutzung des zu spaltenden Wasser oder Kohlendioxid enthaltenden Fluids (50) als Reaktant und Wärmeübertragungsmedium im Kreislauf (15) des pyroelektrischen Wandlers (20, 22) erfolgt.

16. Verfahren nach einem der Ansprüche 10 bis 15,
**dadurch gekennzeichnet,**
**dass** für den Fall, dass das Wasser oder Kohlendioxid enthaltende Fluid (50) eine Flüssigkeit ist, mit Hilfe der Apparatur (5) in Form eines Membrankontaktors die im flüssigen Wasser oder Kohlendioxid enthaltenden Fluid (50) gelösten Spaltprodukte unmittelbar nach dem Reaktor (3) per Druckabsenkung aus der Flüssigkeit (50) heraus in die Gasphase überführt und abgezogen werden, wodurch die zu spaltende Wasser oder Kohlendioxid enthaltende Flüssigkeit (50) damit regeneriert wird und wieder unbeladen für die Zuführung in den Reaktor (3) zur Verfügung steht.

17. Verfahren nach einem der Ansprüche 10 bis 16,
**dadurch gekennzeichnet,**
**dass** im pyroelektrischen Wandler (20, 22, 34, 35, 36) die Spaltreaktionen in sauren oder basischen Fluiden (50) durchgeführt werden, wobei ein hinzugefügter Zusatzstoff wenigstens ein Spaltprodukt (48, 52) während des Prozesses reversibel bindet und dadurch auch für eine Trennung der Spaltprodukte (48, 52) sorgt, wobei eine Beeinflussung des pH-Wertes durch Zusatzstoffe die ablaufenden Redoxreaktionen im Reaktor (3) verbessert, wobei die Zusatzstoffe flüssig oder fest sind.

18. Verfahren nach einem der Ansprüche 10 bis 17,
**dadurch gekennzeichnet,**
**dass** bei Vorliegen von Gas als das zu spaltende Wasser oder Kohlendioxid enthaltende Fluid (50) die Apparatur zur Gasphasenüberführung und/oder Gastrennung (5) mit einer selektiven Membran eine Gastrennung durchführt.

19. Verfahren nach einem der vorhergehenden Ansprüche 10 bis 15 und 18,
**dadurch gekennzeichnet,**
**dass** im Reaktor (3) die Spaltung gasförmiger Substanzen unter erhöhtem Druck durchgeführt wird.

20. Verfahren nach Anspruch 10,
**dadurch gekennzeichnet,**
**dass** die Abtrennung eines Spaltproduktes (48, 52) mit vorgegebenen Adsorbentien oder Absorbentien durchgeführt wird.

## Claims

1. Apparatus (1) for energy and substance conversion by means of pyroelectric materials for producing dissociation products from fluids (50), comprising
- at least not less than two pyroelectric transducers (20, 22) which are connected to one another in respect of a controlled valve device (8) and each have an outflow conduit (11, 23), where a first pyroelectric transducer is suitable for dissociation of water into the dissociation products hydrogen and oxygen and a second pyroelectric transducer is suitable for dissociation of carbon dioxide into the dissociation products carbon monoxide and oxygen,
- at least one conduit (14) for discharge of dissociation products (48, 52) assigned to the first pyroelectric transducer (20),
- at least one conduit (24) for discharge of dissociating products (52, 48) assigned to the second pyroelectric transducer (22),
where a pyroelectric transducer (20, 22) contains at least
- a first heat exchanger (2) which is connected to a feed conduit (7) and has at least one outflow conduit (11) connected to the feed conduit (7) and through which a heat-accepting fluid (50) containing water or carbon dioxide to be dissociated flows,
- at least one reactor (3) for dissociation of the fluid (50) containing water or carbon dioxide into its dissociation products (48, 52), where the reactor (3) comprises at least one pyroelectric material (12) having a prescribed Curie temperature T_{c},
- at least one second heat exchanger (4) in the pyroelectric transducer (20, 22), which heat exchanger is connected to an external buffer medium unit (13) for setting an average temperature,
- an apparatus for gas phase transfer and/or gas separation (5) from which at least the conduit (14) for discharging at least one dissociation product (48, 52) produced in the reactor (3) leads,
where the apparatus (1) comprises at least one separating unit (43) assigned to the pyroelectric transducers (20, 22) for separating the final dissociation products (48, 52) discharged from the apparatus for gas phase transfer and/or gas separation (5) located downstream of the respective reactor (3) and the conduits (14, 24) open, for controlled discharge of the dissociation products (48, 52), into the separation unit (43) from which at least conduits (25, 26) for discharge of separated final dissociation products (48, 52) lead,
**characterized in that**
the valve device (8) is provided for an alternate introduction, with a prescribed valve control frequency, of at least one fluid stream (9) having a high temperature T_{H} and at least one fluid stream (10) having a temperature T_{K} which is lower than the temperature T_{H}, and
there is a controlled circulation pump (6) which is arranged within a circuit (15) which is present in the pyroelectric transducers (20, 22) and comprises the heat exchanger (2), reactor (3) and apparatus for gas phase transfer and/or gas separation (5) which belong to the circuit (15) and are connected to one another and supplies the circuit (15) with flowing fluid (50) containing water or carbon dioxide to be dissociated via a conduit system (16) connecting the circuit (15), where the circulation pump (6) is connected externally via a control unit (18) to the controlled valve device (8).

2. Apparatus according to Claim 1, **characterized in that** a device (19) for introduction of fluid (50) containing water or carbon dioxide to be dissociated and of additives which can optionally be introduced into the fluid (50) containing water or carbon dioxide which is equipped with valves and has an associated outflow conduit (21) is arranged in the pyroelectric transducer (20, 22) for a fluid (50) containing water or carbon dioxide to be dissociated in the circuit (15) between the apparatus for gas phase transfer and/or gas separation (5) and the controlled circulation pump (6).

3. Apparatus according to Claims 1 and 2, **characterized in that** a reactor (3) of a pyroelectric transducer (20, 22) comprises a plurality of reactor segments (27, 28, 29, 30) which are each formed with a pyroelectric material unit (12, 31, 32, 33) and are arranged in such a way that the respective Curie temperature T_{C1}, T_{C2}, T_{C3}, T_{C4} of the pyroelectric materials in the pyroelectric material units (12, 31, 32, 33) decreases in the order T_{C1} > T_{C2} > T_{C3} > T_{C4} over the reactor length L of the reactor (3).

4. Apparatus according to Claim 1, **characterized in that** at least the first pyroelectric transducer (20) and a second pyroelectric transducer (22) are connected in parallel in respect of the controlled valve device (8).

5. Apparatus according to Claims 1 and 2, **characterized in that** a plurality of pyroelectric transducers (34, 35, 36) are arranged and connected in the manner of a temperature-based step-like series, where the series connection of the pyroelectric transducers (34, 35, 36) is assigned according to decreasing Curie temperatures in the order T_{C1} > T_{C2} > T_{C3} of the respective pyroelectric material, where the pyroelectric transducers (34, 35, 36) are connected to a conduit system (37) which connects the pyroelectric transducers (34, 35, 36) and belongs to a heating cycle HZ for the fluids (50h) with temperatures cooling in the order T_{H0} > T_{H1} > T_{H2} > T_{H3} and a cooling cycle KZ for the fluids (50k) having temperatures increasing in the order T_{K0} < T_{K1} < T_{K2} < T_{K3} and each pyroelectric transducer (34, 35, 36) has conduits (39, 40, 41) for discharging in each case at least one dissociation product.

6. Apparatus according to Claim 1, **characterized in that** it comprises at least
- the first pyroelectric transducer (20) for dissociation of water H₂O into the dissociation products hydrogen H₂ and oxygen O₂ from the fluid water H₂O to be dissociated from an external first H₂O source (42),
- the second pyroelectric transducer (22) for the dissociation of carbon dioxide-CO₂ into the dissociation products carbon monoxide CO and oxygen O₂ from the carbon dioxide CO₂ to be dissociated from an external second CO₂ source (47),
- the separation unit (43) for the separation of hydrogen H₂ and oxygen O₂ located downstream of the first pyroelectric transducer (20),
- a second separation unit (44) for the separation of carbon monoxide CO and oxygen O₂ located downstream of the second pyroelectric transducer (22),
- at least one first converter (45) for the synthesis of methane CH₄ and/or methanol CH₃OH from carbon monoxide CO and hydrogen H₂ located downstream of the second separation unit (44).

7. Apparatus according to Claim 6, **characterized in that** the apparatus (1) comprises at least one second converter (46) for the synthesis of methane CH₄ and/or methanol CH₃OH from carbon dioxide CO₂ and hydrogen H₂ located downstream of the first separation unit (43).

8. Apparatus according to Claim 6 or 7, **characterized in that** the converters (45, 46) comprise pyroelectric material.

9. Apparatus according to any of Claims 1 to 8, **characterized in that** the control unit (18) used is connected at least to temperature sensors.

10. Process for energy and substance conversion by means of pyroelectric materials for producing the dissociation products from fluids (50) containing water or carbon dioxide using an apparatus (1) according to Claims 1 to 9, **characterized by** at least the following steps:
- alternate introduction of at least one fluid stream (9) having the high temperature T_{H} and of at least one fluid stream (10) having a temperature T_{K} which is lower than the temperature T_{H} via a controlled valve device (8) into at least one pyroelectric transducer (20, 22), where the temperatures T_{H} and T_{K} are in a temperature window which is below the Curie temperature T_{C} of the respective pyroelectric material (12) used in a reactor (3),
- transfer of the heat from the fluid streams (9, 10) via a heat exchanger (2) directly to the fluid (50) containing water or carbon dioxide to be dissociated, where the controlled alternate introduction of fluid streams (9, 10) having different temperatures T_{H} and T_{K} is carried out into the heat exchanger (2) for controlling the heat-accepting fluid (50) containing water or carbon dioxide for a circuit (15) in a pyroelectric transducer (20, 22),
- flow through at least one reactor (3) comprising pyroelectric material by means of the fluid (50) containing water or carbon dioxide to be dissociated as heat transfer medium,
- dissociation of the fluid (50) containing water or carbon dioxide to be dissociated into at least one dissociation product (48, 52) within at least one reactor (3) below the Curie temperature Tc of the pyroelectric material present there in a prescribed temperature window, where the temperature sensors carry out measurements of the temperatures for the respective maintenance of the distance from the Curie temperature Tc and also control of the temperature window below the respective Curie temperature Tc of the pyroelectric materials,
- realization of alternating heating cycle HZ and cooling cycle KZ in the apparatus (1) at a prescribed frequency,
- setting of an average temperature of the fluid (50) containing water or carbon dioxide to be dissociated in a second heat exchanger (4) by means of a buffer medium from an external buffer medium unit (13) within a pyroelectric transducer (20, 22, 34, 35, 36),
- isolation of at least one of the dissociation products (48) produced in the reactor (3) in at least one downstream separation unit (43, 44).

11. Process according to Claim 10, **characterized in that** the temperature fluctuations of the fluid streams (9, 10) fed in via the controlled valve device (8) are used as heat transfer medium in the pyroelectric transducer (20, 22) for heating and cooling the fluid (50) containing water or carbon dioxide to be dissociated.

12. Process according to Claim 10, **characterized in that** immediate transport of the dissociation products (48) from the reactor (3) occurs.

13. Process according to Claim 10 or 11, **characterized in that** maintenance of temperature changes/fluctuations over time is carried out by effecting the change between heating cycle HZ and cooling cycle KZ within a prescribed temperature window below the Curie temperature Tc of the respective pyroelectric material.

14. Process according to Claims 10 to 13, **characterized in that** the pyroelectric materials are arranged in the pyroelectric material units (12, 31, 32, 33) of the reactors (3) in a staggered manner in the flow direction in the heating cycle HZ so that the Curie temperatures T_{C} of the pyroelectric materials decrease with decreasing temperature of the fluid (50) containing water or carbon dioxide to be dissociated which flows through.

15. Process according to Claim 10, **characterized in that** the fluid (50) containing water or carbon dioxide to be dissociated is utilized as reactant and heat transfer medium in the circuit (15) of the pyroelectric transducer (20, 22).

16. Process according to any of Claims 10 to 15, **characterized in that**, when the fluid (50) containing water or carbon dioxide is a liquid, the dissociating products dissolved in the liquid fluid (50) containing water or carbon dioxide are transferred from the liquid (50) into the gas phase and taken off directly downstream of the reactor (3) by lowering of the pressure by means of the apparatus (5) in the form of a membrane contactor, as a result of which the liquid (50) containing water or carbon dioxide to be dissociated is regenerated and is again available in unloaded form for introduction into the reactor (3).

17. Process according to any of Claims 10 to 16, **characterized in that** the dissociation reactions are carried out in acidic or basic fluids (50) in the pyroelectric transducer (20, 22, 34, 35, 36), where an added additive reversibly binds at least one dissociation product (48, 52) during the process and thereby also brings about separation of the dissociation products (48, 52), where influencing of the pH by additives improves the redox reactions occurring in the reactor (3), where the additives are liquid or solid.

18. Process according to any of Claims 10 to 17, **characterized in that**, if gas is present as the fluid (50) containing water or carbon dioxide to be dissociated, the apparatus for gas phase transfer and/or gas separation (5) carries out a gas separation by means of a solid membrane.

19. Process according to any of the preceding Claims 10 to 15 and 18, **characterized in that** the dissociation of gaseous substances is carried out under super atmospheric pressure in the reactor (3).

20. Process according to Claim 10, **characterized in that** the isolation of a dissociated product (48, 52) is carried out using prescribed adsorbents or absorbents.

## Revendications

1. Dispositif (1) pour la transformation d'énergie et de matière au moyen de matériaux pyroélectriques pour la production de produits de clivage à partir de fluides (50), comprenant :
- au moins deux transformateurs pyroélectriques (20, 22), qui sont raccordés l'un à l'autre relativement à un système de soupapes commandées (8) et qui comprennent chacun une conduite de sortie (11, 23), un premier transformateur pyroélectrique étant approprié pour le clivage d'eau en les produits de clivage hydrogène et oxygène, et un deuxième transformateur pyroélectrique étant approprié pour le clivage de dioxyde de carbone en les produits de clivage monoxyde de carbone et oxygène,
- au moins une conduite (14), associée au premier transformateur pyroélectrique (20), pour l'évacuation de produits de clivage (48, 52),
- au moins une conduite (24), associée au deuxième transformateur pyroélectrique (22), pour l'évacuation de produits de clivage (52, 48),
un transformateur pyroélectrique (20, 22) contenant au moins :
- un premier échangeur de chaleur (2), qui est relié avec une conduite d'alimentation (7), qui possède au moins une conduite de sortie (11) en connexion avec la conduite d'alimentation (7) et au travers duquel un fluide (50) absorbant de la chaleur, contenant de l'eau ou du dioxyde de carbone à cliver s'écoule,
- au moins un réacteur (3) pour le clivage du fluide (50) contenant de l'eau ou du dioxyde de carbone en ses produits de clivage (48, 52), le réacteur (3) comprenant au moins un matériau pyroélectrique (12) ayant une température de Curie T_{C} prédéfinie,
- au moins un deuxième échangeur de chaleur (4) dans le transformateur pyroélectrique (20, 22), qui est relié avec une unité de milieu tampon externe (13) pour l'ajustement d'une température moyenne,
- un appareil pour le transfert en phase gazeuse et/ou la séparation de gaz (5), duquel part au moins la conduite (14) pour l'évacuation d'au moins un produit de clivage (48, 52) formé dans le réacteur (3),
le dispositif (1) comportant au moins une unité de séparation (43) associée aux transformateurs pyroélectriques (20, 22), pour la séparation des produits de clivage finaux (48, 52) évacués de l'appareil pour le transfert en phase gazeuse et/ou la séparation de gaz (5) agencé en aval du réacteur respectif (3), et les conduites (14, 24) pour l'évacuation contrôlée des produits de clivage (48, 52) débouchant dans l'unité de séparation (43), de laquelle partent au moins des conduites (25, 26) pour l'évacuation de produits de clivage finaux séparés (48, 52),
**caractérisé en ce que**
le système de soupapes (8) est prévu pour une alimentation alternée, commutée avec une fréquence de commande de soupapes prédéfinie, d'au moins un courant de fluide (9) ayant une température élevée T_{H} et d'au moins un courant de fluide (10) ayant une température T_{K} plus faible que la température T_{H}, et
une pompe de recirculation commandée (6) est présente, qui est agencée au sein d'un circuit (15) présent dans les transformateurs pyroélectriques (20, 22) avec l'échangeur de chaleur (2), le réacteur (3) et l'appareil pour le transfert en phase gazeuse et/ou la séparation de gaz (5) appartenant au circuit (15) et reliés les uns aux autres, et qui alimente le circuit (15) en fluide (50) en écoulement et contenant de l'eau ou du dioxyde de carbone à cliver par l'intermédiaire d'un système de conduites (16) reliant le circuit (15), la pompe de recirculation (6) étant en connexion extérieurement avec le système de soupapes commandées (8) par l'intermédiaire d'une unité de commande (18).

2. Dispositif selon la revendication 1,
**caractérisé en ce que**
dans le transformateur pyroélectrique (20, 22) pour un fluide (50) contenant de l'eau ou du dioxyde de carbone à cliver, un système (19) configuré avec des soupapes pour l'alimentation de fluide (50) contenant de l'eau ou du dioxyde de carbone à cliver et optionnellement d'additifs pouvant être incorporés dans le fluide (50) contenant de l'eau ou du dioxyde de carbone avec une conduite de sortie associée (21) est agencé dans le circuit (15) entre l'appareil pour le transfert en phase gazeuse et/ou la séparation de gaz (5) et la pompe de recirculation commandée (6).

3. Dispositif selon les revendications 1 à 2,
**caractérisé en ce que**
un réacteur (3) d'un transformateur pyroélectrique (20, 22) comporte plusieurs segments de réacteur (27, 28, 29, 30), qui sont chacun configurés avec une unité de matériau pyroélectrique (12, 31, 32, 33) et qui sont agencés de telle sorte que la température de Curie respective T_{C1}, T_{C2}, T_{C3}, T_{C4} des matériaux pyroélectriques dans les unités de matériau pyroélectrique (12, 31, 32, 33) se réduise sur la longueur de réacteur L du réacteur (3) avec T_{C1} > T_{C2} > T_{C3} > T_{C4}.

4. Dispositif selon la revendication 1,
**caractérisé en ce que**
au moins le premier transformateur pyroélectrique (20) et un deuxième transformateur pyroélectrique (22) sont raccordés parallèlement l'un à l'autre relativement au système de soupapes commandées (8).

5. Dispositif selon les revendications 1 à 2,
**caractérisé en ce que**
plusieurs transformateurs pyroélectriques (34, 35, 36) sont agencés et raccordés à la façon d'une série à paliers au regard de la température, le raccordement en série des transformateurs pyroélectriques (34, 35, 36) étant ordonné selon les températures de Curie descendantes avec T_{C1} > T_{C2} > T_{C3} du matériau pyroélectrique respectif,
les transformateurs pyroélectriques (34, 35, 36) étant en connexion avec un système de conduites (37), reliant les transformateurs pyroélectriques (34, 35, 36), d'un cycle de chauffage HZ pour les fluides (50h) avec une température se refroidissant avec T_{H0} > T_{H1} > T_{H2} > T_{H3} et d'un cycle de refroidissement KZ pour les fluides (50k) avec une température croissante T_{K0} < T_{K1} < T_{K2} < T_{K3} et chaque transformateur pyroélectrique (34, 35, 36) comprenant des conduites (39, 40, 41) pour l'évacuation respective d'au moins un produit de clivage.

6. Dispositif selon la revendication 1,
**caractérisé en ce que**
il comprend au moins
- le premier transformateur pyroélectrique (20) pour le clivage d'eau H₂O en les produits de clivage hydrogène H₂ et oxygène O₂ à partir du fluide eau H₂O à cliver issu d'une première source d'H₂O externe (42),
- le deuxième transformateur pyroélectrique (22) pour le clivage de dioxyde de carbone CO₂ en les produits de clivage monoxyde de carbone CO et oxygène O₂ à partir du dioxyde de carbone CO₂ à cliver issu d'une deuxième source de CO₂ externe (47),
- l'unité de séparation (43) agencée en aval du premier transformateur pyroélectrique (20), pour la séparation d'hydrogène H₂ et d'oxygène O₂,
- une deuxième unité de séparation (44) agencée en aval du deuxième transformateur pyroélectrique (22), pour la séparation de monoxyde de carbone CO et d'oxygène O₂,
- au moins un premier convertisseur (45) agencé en aval de la deuxième unité de séparation (44), pour la synthèse de monoxyde de carbone CO et d'hydrogène H₂ en méthane CH₄ et/ou en méthanol CH₃OH.

7. Dispositif selon la revendication 6,
**caractérisé en ce que**
le dispositif (1) comprend au moins un deuxième convertisseur (46) agencé en aval de la première unité de séparation (43), pour la synthèse de dioxyde de carbone CO₂ et d'hydrogène H₂ en méthane CH₄ et/ou en méthanol CH₃OH.

8. Dispositif selon la revendication 6 ou 7,
**caractérisé en ce que**
les convertisseurs (45, 46) comprennent un matériau pyroélectrique.

9. Dispositif selon les revendications 1 à 8,
**caractérisé en ce que**
l'unité de commande utilisée (18) est en connexion au moins avec des capteurs de température.

10. Procédé de transformation d'énergie et de matière au moyen de matériaux pyroélectriques pour la production de produits de clivage à partir de fluides (50) contenant de l'eau ou du dioxyde de carbone, utilisant un dispositif (1) selon les revendications 1 à 9,
**caractérisé par** au moins les étapes suivantes :
- l'alimentation alternée d'au moins un courant de fluide (9) ayant la température élevée T_{H} et d'au moins un courant de fluide (10) ayant une température T_{K} plus faible que la température T_{H} par l'intermédiaire d'un système de soupapes commandées (8) dans au moins un transformateur pyroélectrique (20, 22), les températures T_{H} et T_{K} appartenant à une fenêtre de température qui se situe en dessous de la température de Curie T_{C} du matériau pyroélectrique (12) respectivement utilisé dans un réacteur (3),
- le transfert de la chaleur des courants de fluide (9, 10) par l'intermédiaire d'un échangeur de chaleur (2) directement vers le fluide (50) contenant de l'eau ou du dioxyde de carbone à cliver, l'alimentation alternée commandée de courants de fluide (9, 10) de différente température T_{H} et T_{K} dans l'échangeur de chaleur (2) étant réalisée pour la commande du fluide (50) contenant de l'eau ou du dioxyde de carbone absorbant de la chaleur pour un circuit (15) dans un transformateur pyroélectrique (20, 22),
- la traversée d'au moins un réacteur (3) contenant un matériau pyroélectrique au moyen du fluide (50) contenant de l'eau ou du dioxyde de carbone à cliver en tant que milieu caloporteur,
- la réalisation du clivage du fluide (50) contenant de l'eau ou du dioxyde de carbone à cliver en au moins un produit de clivage (48, 52) au sein d'au moins un réacteur (3) en dessous de la température de Curie Tc du matériau pyroélectrique local dans une fenêtre de température prédéfinie, les capteurs de température réalisant des mesures des températures pour le respect respectif de l'écart à la température de Curie Tc, ainsi qu'en outre une commande de la fenêtre de température en dessous de la température de Curie Tc respective des matériaux pyroélectriques,
- la réalisation d'un cycle de chauffage HZ et d'un cycle de refroidissement KZ commutés de manière alternée dans le dispositif (1) avec une fréquence prédéfinie,
- l'ajustement d'une température moyenne du fluide (50) contenant de l'eau ou du dioxyde de carbone à cliver dans un deuxième échangeur de chaleur (4) par un milieu tampon issu d'une unité de milieu tampon externe (13) au sein d'un transformateur pyroélectrique (20, 22, 34, 35, 36),
- la séparation d'au moins un des produits de clivage (48) formés dans le réacteur (3) dans au moins une unité de séparation ultérieure (43, 44).

11. Procédé selon la revendication 10,
**caractérisé en ce que**
les fluctuations de température des courants de fluide (9, 10) introduits par l'intermédiaire du système de soupapes commandées (8) sont utilisées pour le réchauffement et pour le refroidissement du fluide (50) contenant de l'eau ou du dioxyde de carbone à cliver en tant que milieu caloporteur dans le transformateur pyroélectrique (20, 22).

12. Procédé selon la revendication 10,
**caractérisé en ce que**
un transport immédiat des produits de clivage (48) hors du réacteur (3) a lieu.

13. Procédé selon la revendication 10 ou 11,
**caractérisé en ce que**
un maintien de modifications/fluctuations de température temporelles est réalisé par accomplissement de l'alternance de cycle de chauffage HZ et cycle de refroidissement KZ au sein d'une fenêtre de température prédéfinie en dessous de la température de Curie Tc du matériau pyroélectrique respectif.

14. Procédé selon les revendications 10 à 13,
**caractérisé en ce que**
les matériaux pyroélectriques dans les unités de matériau pyroélectrique (12, 31, 32, 33) des réacteurs (3) sont agencés dans la direction d'écoulement lors du cycle de chauffage HZ de manière échelonnée de telle sorte que les températures de Curie T_{C} des matériaux pyroélectriques diminuent avec la diminution de la température du fluide (50) en écoulement et contenant de l'eau ou du dioxyde de carbone à cliver.

15. Procédé selon la revendication 10,
**caractérisé en ce que**
une utilisation du fluide (50) contenant de l'eau ou du dioxyde de carbone à cliver en tant que réactif et milieu de transfert de chaleur dans le circuit (15) du transformateur pyroélectrique (20, 22) a lieu.

16. Procédé selon l'une quelconque des revendications 10 à 15,
**caractérisé en ce que**
dans le cas où le fluide (50) contenant de l'eau ou du dioxyde de carbone est un liquide, à l'aide de l'appareil (5) sous la forme d'un contacteur à membrane, les produits de clivage dissous dans le fluide (50) liquide contenant de l'eau ou du dioxyde de carbone sont transférés dans la phase gazeuse à partir du liquide (50) directement après le réacteur (3) par abaissement de pression et soutirés, le liquide (50) contenant de l'eau ou du dioxyde de carbone à cliver étant ainsi régénéré et étant de nouveau mis à disposition non chargé pour l'alimentation dans le réacteur (3).

17. Procédé selon l'une quelconque des revendications 10 à 16,
**caractérisé en ce que**
dans le transformateur pyroélectrique (20, 22, 34, 35, 36), les réactions de clivage sont réalisées dans des fluides acides ou basiques (50), un additif ajouté se liant de manière réversible à au moins un produit de clivage (48, 52) pendant le processus et permettant ainsi également une séparation des produits de clivage (48, 52), un effet sur le pH des additifs améliorant les réactions redox en cours dans le réacteur (3), les additifs étant liquides ou solides.

18. Procédé selon l'une quelconque des revendications 10 à 17,
**caractérisé en ce que**
en présence de gaz en tant que fluide (50) contenant de l'eau ou du dioxyde de carbone à cliver, l'appareil pour le transfert en phase gazeuse et/ou la séparation de gaz (5) réalise une séparation de gaz avec une membrane sélective.

19. Procédé selon l'une quelconque des revendications 10 à 15 et 18 précédentes,
**caractérisé en ce que**
dans le réacteur (3), le clivage de substances gazeuses est réalisé sous pression élevée.

20. Procédé selon la revendication 10,
**caractérisé en ce que**
la séparation d'un produit de clivage (48, 52) est réalisée avec des adsorbants ou absorbants prédéfinis.
